Europäisches Patentamt

European Patent Office

Office européen des brevets

(19)

(11) **EP 1 063 043 B1**

(12) **FASCICULE DE BREVET EUROPEEN**

(45) Date de publication et mention
de la délivrance du brevet:
**26.03.2003 Bulletin 2003/13**

(51) Int Cl.$^7$: **B23H 1/02**

(21) Numéro de dépôt: **00112581.4**

(22) Date de dépôt: **14.06.2000**

(54) **Procédé et dispositif pour l'usinage par électroérosion**

Verfahren und Vorrichtung zur Funkenerosionsbearbeitung

Process for electric discharge machining and apparatus therefor

(84) Etats contractants désignés:
**AT BE CH CY DE DK ES FI FR GB GR IE IT LI LU MC NL PT SE**

(30) Priorité: **21.06.1999 CH 115399**

(43) Date de publication de la demande:
**27.12.2000 Bulletin 2000/52**

(73) Titulaire: **CHARMILLES TECHNOLOGIES S.A.**
**1217 Meyrin 1 (CH)**

(72) Inventeurs:
• **Martin, Roland**
**74520 Dingy en Vuache (FR)**
• **Gamboni, Aldo**
**1209 Geneve (CH)**

• **Tognolini, Maurizio**
**1269 Bassins/VD (CH)**
• **Bovay, Gilbert**
**1004 Lausanne (CH)**

(74) Mandataire: **Micheli & Cie**
**Rue de Genève 122,**
**Case Postale 61**
**1226 Genève-Thonex (CH)**

(56) Documents cités:
**EP-A- 0 412 262          US-A- 3 974 357**
**US-A- 4 237 370**

• **PATENT ABSTRACTS OF JAPAN vol. 013, no. 252 (M-836), 12 juin 1989 (1989-06-12) -& JP 01 058426 A (HITACHI SEIKO LTD), 6 mars 1989 (1989-03-06)**

Printed by Jouve, 75001 PARIS (FR)

**Description**

La présente invention concerne un procédé et un dispositif d'usinage par électroérosion, avec lequel on usine une électrode-pièce au moyen d'une électrode-outil séparées l'une de l'autre par un espace de travail en appliquant des impulsions électriques entre l'électrode-outil et l'électrode-pièce au moyen d'un circuit électrique codde tension à basse impédance et d'un circuit de régulation.

L'usinage par électroérosion nécessite un générateur de décharges intermittentes qui est connecté entre la pièce et l'électrode, cette dernière ayant pour tâche de pénétrer progressivement dans la pièce grâce à l'action érosive des décharges.

Dans la mesure où l'électrode ne subit qu'une faible usure, on obtient en creux une reproduction fidèle de la forme de l'électrode dans le cas d'une pénétration selon un seul axe, grâce à un servomécanisme qui maintient une distance optimale entre la pièce et l'électrode, distance dite d'étincelage, et qui est de l'ordre de quelques dizaines de micromètres. D'autres servomécanismes peuvent assurer des mouvements relatifs de translation et/ou de rotation selon d'autres axes et l'on tient compte des amplitudes de ces mouvements pour prévoir la déformation de l'empreinte. Ces mouvements et ces servomécanismes ne seront pas traités, ni même représentés ici, car il s'agit de techniques parfaitement connues et maîtrisées. Toutefois des empreintes précises ne peuvent être obtenues que si les dimensions initiales de l'électrode sont conservées au cours de l'usinage et, si tel n'est pas le cas, il est nécessaire de confectionner plusieurs électrodes, ce qui entraîne des coûts supplémentaires et rendent l'électroérosion peu économique. Le problème de réaliser un générateur à très faible usure est toujours d'actualité, bien que les performances en terme d'usure volumétrique soient remarquables, puisqu'on obtient aujourd'hui, avec des générateurs courants, dans certaines bonnes conditions, des valeurs aussi faibles que 0.1%. Malheureusement, cette usure n'est pas également répartie, elle est en fait concentrée sur les parties pointues et les arêtes de l'électrode, de sorte que la parfaite reproduction de forme n'est pas assurée.

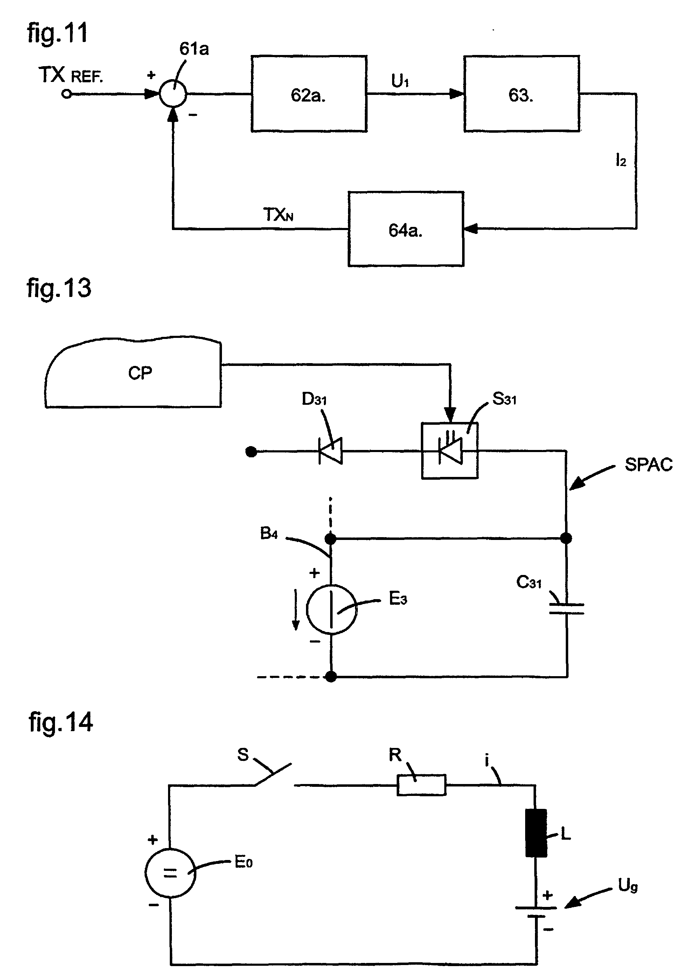

Les générateurs du type à limitation de courant par résistance sont connus depuis que l'on a su mettre en oeuvre des transistors pour générer des décharges intermittentes. La figure 14 montre de manière très simplifiée le principe, notamment en symbolisant le transistor par un interrupteur S. $E_o$ est la tension interne ou tension à vide de la source, le courant est limité par la résistance R, par l'inductance parasite ou répartie de valeur L, et par l'impédance de l'espace entre électrode et pièce. Lors d'une décharge érosive, cette impédance est représentée de manière idéalisée par un élément qui maintient la tension $U_g$ à ses bornes, quel que soit le courant i. Bien entendu, la réalité physique est bien plus complexe, notamment par le fait que la tension électrode-pièce est nettement plus élevée en début de décharge, et évolue vers une certaine valeur $U_g$ définie comme étant la moyenne statistique des tensions en fin de décharge. Pour la compréhension de la suite, il est rappelé que, dès le début d'une décharge, le courant croît avec une pente $di/dt = (E_o - U_g) / L$ et qu'il tend asymptotiquement vers $(E_o - U_g) /R$. Ce type de générateur donne des usures acceptables, mais malheureusement l'obtention de très faibles usures exige, comme on le verra plus loin, une tension $E_o$ réglable et très voisine de $U_g$, de sorte que le pilotage du courant asymptotique exigerait encore de régler finement la valeur de R, ce qui serait très difficile et coûteux.

Les générateurs du type source de courant forment une deuxième catégorie qui offre beaucoup de souplesse dans le pilotage du courant, car des transistors de commutation imposent au courant de suivre une consigne. Ils sont ainsi capables de maintenir un courant pratiquement constant dans une décharge, quelle que soit la tension à ses bornes, ou du moins jusqu'à une certaine limite.

Mais ce type de générateur présente l'inconvénient de produire des impulsions de courant avec une pente initiale beaucoup trop raide, ce qui est une cause d'usure.

Le but de la présente invention est d'obtenir un procédé et un dispositif qui éliminent les inconvénients précités et qui permettent de réduire l'usure de l'électrode-outil à un minimum et de réaliser une parfaite reproduction de forme, tout en assurant un pilotage aisé du courant pendant et après la montée du courant d'usinage.

L'invention est caractérisée à cet effet par le fait que l'on effectue un réglage de la montée en courant des impulsions électriques en fonction du temps après l'amorçage d'une décharge entre l'électrode-outil et l'électrode-pièce de façon qu'un paramètre lié à cette montée en courant soit sensiblement égal à une grandeur de référence correspondant à une valeur d'usure minimale de l'électrode-outil.

Ces caractéristiques permettent d'obtenir un procédé et un dispositif d'usinage assurant une très faible usure de l'électrode-outil. Les dimensions et la forme initiales de cette dernière sont conservées au cours de l'usinage, ce qui rend l'électroérosion très précise et économique. On opère ainsi dès l'amorçage d'une décharge selon un premier mode où un courant transitoire prend naissance sous l'effet d'une source de tension à basse impédance, source connectée entre l'électrode et la pièce, l'impédance étant suffisamment basse pour que la croissance du courant soit déterminée non seulement par les caractéristiques électriques du circuit, mais encore par la tension de décharge, la montée en courant ayant été réglée à une valeur d'usure minimale prédéterminée par des essais technologiques et, dès que le courant transitoire atteint une valeur voulue, on opère selon un deuxième mode où le courant est essentiellement déterminé par les caractéristiques électriques du circuit.

L'avantage principal, qui est l'obtention de très faibles usures, a une grande importance économique car, comme mentionné dans l'introduction, il permet non seulement d'usiner avec précision, mais encore de réduire le nombre d'électrodes nécessaires.

Un autre avantage est que le procédé peut être implanté dans divers types connus de générateur : limitation de courant par résistance, limitation de courant par inductance et transistors de commutation agencés pour créer une source de courant et aussi convertisseur DC-DC. De plus, les avantages inhérents au générateur servant de plate-forme peuvent être conservés. Par exemple un générateur à source de courant selon la technique connue est transformé en un nouveau générateur permettant le pilotage de la pente initiale de montée de courant des décharges, ce qui permet de chercher des réglages assurant la très faible usure. En outre, des avantages du générateur à source de courant sont conservés, notamment l'absence de tout élément additionnel tel que résistance ou inductance destiné à limiter le courant, cette dernière fonction étant assurée par des commutations rapides de transistors de puissance. La souplesse de pilotage de ce générateur lui permet de générer une grande variété de formes d'impulsions de courant.

Avantageusement, le procédé est caractérisé par le fait que l'on effectue le réglage de la montée en courant des impulsions électriques durant une première phase transitoire et que l'on maintient dans une deuxième phase le courant d'usinage à au moins une valeur de consigne dès que la montée en courant a atteint cette valeur de consigne.

On obtient ainsi une très faible usure de l'électrode-outil associée à une électroérosion efficace et d'un pilotage aisé.

Selon un mode d'exécution préféré, le réglage de la montée en courant est effectué au moyen d'une boucle d'asservissement de manière qu'une grandeur statistique représentative dudit paramètre coïncide avec ladite grandeur de référence prédéterminée.

Compte tenu du fait que le réglage de la montée du courant d'usinage est très critique, un asservissement permet d'assurer la reproductibilité sur le terrain des régimes à très faible usure obtenus en laboratoire, en dépit des perturbations telles que les différentes longueurs de lignes, le vieillissement et les tolérances des éléments, les variations de température, etc.

Très favorablement, ledit réglage est effectué en agissant sur la tension interne réglable d'au moins une source de tension réglable à basse impédance.

Ces caractéristiques permettent d'obtenir un réglage très fin et précis de la pente de montée du courant d'usinage.

De façon avantageuse, la grandeur de référence correspondant à une valeur d'usure minimale est déterminée en faisant varier la tension interne de la source de tension réglable et en observant la dispersion du spectre des angles de pente de montée en courant d'un nombre donné de décharges.

La grandeur de référence pourra ainsi être obtenue lorsque la dispersion de ce spectre est sensiblement maximum.

Le résultat surprenant des mesures d'usure démontre qu'une usure minimale est en corrélation directe avec la dispersion du spectre des montées de courant d'une série de décharge. On peut ainsi obtenir, grâce à l'observation de la dispersion du spectre des montées en courant, les conditions d'usure minimale correspondant à une valeur de la grandeur de référence, telle que la pente optimale de montée du courant d'usinage.

Un mode d'exécution préféré est caractérisé par le fait que l'on effectue un asservissement d'une pente moyenne de montée en courant des décharges érosives au moyen de boucles d'asservissement successives, en lançant un cycle d'usinage avec ladite tension interne fixée à une valeur initiale correspondant à une tension de référence préétablie, en écartant par un test de discrimination les décharges contaminées, de courts-circuits et d'arcs, en déterminant la pente de montée en courant des décharges retenues, en effectuant n = N cycles d'usinage en calculant la pente moyenne de montée en courant sur les N décharges retenues, en comparant la pente moyenne de montée en courant obtenue à ladite pente de référence, en diminuant, respectivement en augmentant la tension interne d'une valeur de réglage prédéterminée, si la pente moyenne calculée est supérieure à la pente de référence additionnée d'un écart de réglage, respectivement inférieure à la pente de référence diminuée de cet écart de réglage, de façon à obtenir une nouvelle valeur initiale de ladite tension interne et en effectuant des boucles d'asservissement successives avec les nouvelles valeurs initiales de la tension interne.

Cet asservissement est facile à réaliser au moyen d'une unité de commande simple et permet de reproduire sur le terrain les meilleurs résultats en usure.

Dans une variante étonnante, ledit paramètre est le taux des décharges bloquées lors desquelles la source de tension à basse impédance ne débite pas de courant, la montée en courant des impulsions électriques étant réglée de façon que ce taux des décharges bloquées coïncide avec un taux de référence correspondant à une usure minimale.

Ces caractéristiques permettent d'obtenir un procédé dont la mise en oeuvre est facile à réaliser et qui assure des résultats d'usure minimale très favorables.

Le procédé est alors favorablement caractérisé par le fait que l'on effectue un asservissement de la montée en courant des décharges érosives au moyen de boucles d'asservissement successives, en lançant un cycle d'usinage avec ladite tension interne fixé à une valeur initiale correspondant à une tension de référence préétablie, en écartant par un test de discrimination les décharges contaminées, de courts-circuits et d'arcs, en détectant les décharges bloquées, en effectuant n = N cycles d'usinage, en calculant le taux de décharges bloquées, en comparant ce dernier à un taux de référence préétabli correspondant à une usure minimale de l'électrode-outil, en diminuant, respectivement en augmentant la tension interne d'une valeur de réglage, si le taux calculé est inférieur au taux de référence diminué d'un écart de réglage, respectivement supérieur au taux de référence additionné d'un écart de réglage, de façon à obtenir une nouvelle valeur initiale de la tension interne, et en effectuant des boucles d'asservissement successives avec les nouvelles valeurs initiales de la tension interne obtenues.

Il est bien entendu que la présente invention concerne également un dispositif pour la mise en oeuvre d'un procédé d'usinage par électroérosion comprenant une électrode-outil séparée par une fente de travail d'une électrode-pièce, un circuit électrique avec au moins une source de tension à basse impédance et un circuit de régulation agencés de façon à appliquer des impulsions électriques entre l'électrode-outil et l'électrode-pièce, caractérisé par le fait qu'il comprend des moyens de réglage pour régler la montée en courant en fonction du temps après l'amorçage d'une décharge entre l'électrode-outil et l'électrode-pièce de façon qu'un paramètre lié à cette montée en courant soit sensiblement égal à une grandeur de référence correspondant à une valeur d'usure minimale de l'électrode-outil.

Ce dispositif permet l'obtention de très faibles usures de l'électrode-outil et un usinage très précis. Il permet également la modification aisée de générateurs d'électroérosion existants à une très faible usure.

Avantageusement, les moyens de réglage sont agencés de façon à modifier la tension interne ajustable d'au moins une source de tension à basse impédance.

Selon un mode d'exécution favorable, le dispositif est caractérisé par le fait que ledit paramètre est la pente moyenne de montée du courant d'usinage et par le fait qu'il comprend des moyens susceptibles de régler cette pente moyenne de façon qu'elle coïncide avec une pente de référence préétablie à usure minimale de l'électrode-outil.

Ces caractéristiques assurent un réglage facile et précis des conditions d'usure minimales.

Selon un mode d'exécution favorable, le dispositif est caractérisé par le fait qu'il comprend une première source de tension à basse impédance dont la tension interne peut être réglée par une unité de commande, une première branche reliant une première borne de la première source de tension à l'électrode-outil et comportant, en série, une seconde source de tension à basse impédance, un premier interrupteur, un premier organe de mesure d'un premier courant, une bobine de self-induction, un second interrupteur, un second organe de mesure d'un second courant et une première diode, l'entrée du second interrupteur étant reliée par une seconde diode à la première borne de la première source de tension, et par le fait que l'électrode-pièce est reliée à la seconde borne de la première source par une troisième branche, elle-même reliée par une troisième diode à la sortie du premier interrupteur et par une quatrième diode à la sortie du second interrupteur, l'unité de commande recevant des signaux des organes de mesure et adressant des signaux de commande à la première source de tension et aux interrupteurs.

On obtient ainsi un générateur d'électro-usinage permettant d'obtenir un réglage et un asservissement très précis des conditions d'usinage à une usure minimale de l'électrode-outil et un pilotage aisé du courant d'usinage pendant tout le cycle d'une décharge.

Un autre mode d'exécution très avantageux est caractérisé par le fait qu'il comprend une première source de tension à basse impédance dont une première borne est reliée à l'électrode-outil par une première branche comprenant, en série, un premier interrupteur, une source additionnelle de tension à basse impédance dont la tension interne peut être réglée par une unité de commande, un organe de mesure de courant et une première diode, par le fait que l'électrode-pièce est reliée par une seconde branche avec un second interrupteur à la seconde borne de la première source de tension, et par le fait qu'il comprend une troisième branche comportant une seconde diode reliant les entrées des deux interrupteurs et une quatrième branche comportant une troisième diode reliant les sorties des deux interrupteurs, l'unité de commande recevant des signaux de l'organe de mesure et adressant des signaux de commande à la source additionnelle de tension et aux interrupteurs.

Ce mode d'exécution présente une construction particulièrement simple et peu coûteuse permettant cependant un pilotage aisé du courant d'usinage dans sa phase transitoire et sa phase régulée. En outre, une adaptation de l'invention à des circuits préexistants peut être réalisée.

D'autres avantages ressortent des caractéristiques exprimées dans les revendications dépendantes et de la description exposant ci-après l'invention plus en détail à l'aide de dessins qui représentent schématiquement et à titre d'exemple des modes d'exécution et des variantes.

La figure 1 est une représentation schématique d'un premier mode d'exécution du dispositif d'usinage par électroérosion.

Les figures 2 à 4 sont des vues illustrant l'angle de pente des montées du courant d'usinage pour trois valeurs de tension de la source de tension $E_1$.

La figure 5 illustre la dispersion DA en degrés des pentes de montée en courant en fonction de la tension $U_1$ de la source de tension $E_1$.

La figure 6 représente un schéma de réglage et d'asservissement de la pente moyenne $\bar{P}_N$ des montées de courant à une grandeur de référence $P_{ref}$.

La figure 7 représente un organigramme des opérations effectuées lors de l'asservissement de la pente moyenne $\bar{P}_N$.

La figure 8 représente un séquencement des signaux du circuit de la figure 1 en fonction du temps.

La figure 9 illustre l'évolution de la tension $U_g$ à travers le gap pour différents types de décharges.

La figure 10 illustre une corrélation entre le taux TXn de décharges bloquées et la dispersion DA des pentes de montée du courant d'usinage en fonction de la tension $U_1$ de la source de tension $E_1$.

La figure 11 représente un schéma de réglage et d'asservissement basé sur le taux TXn des décharges bloquées.

La figure 12 est une représentation schématique d'un second mode d'exécution du dispositif d'usinage par électroérosion.

La figure 13 représente un dispositif de protection anti-courts-circuits susceptible d'être intégré dans les deux modes d'exécution décrits.

La figure 14 concerne un schéma simplifié d'un générateur conformément à une technique antérieure.

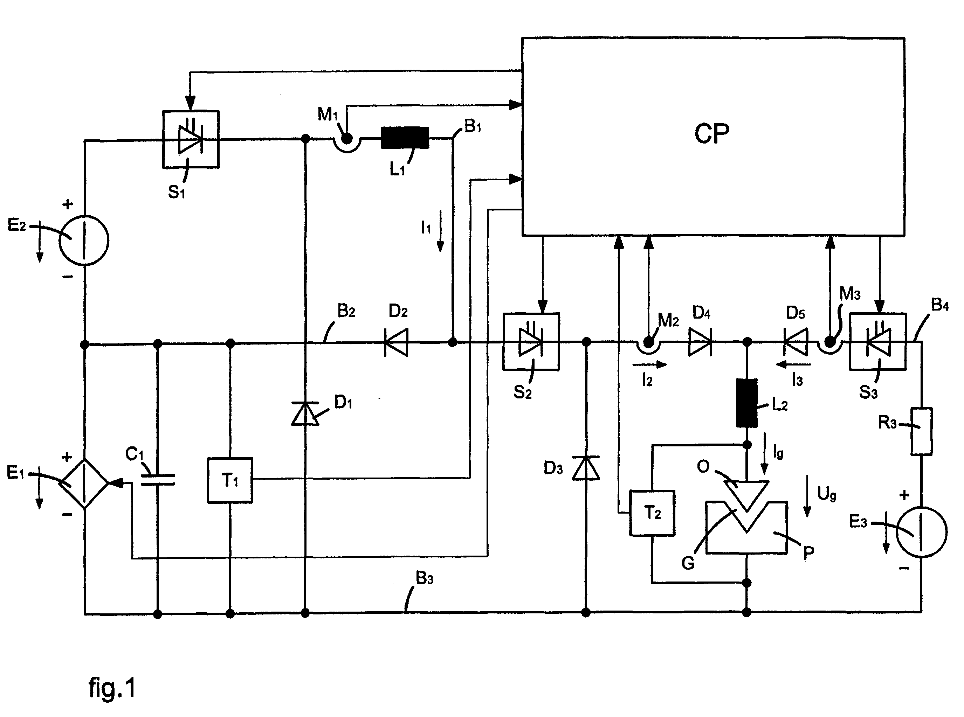

Un premier mode d'exécution du dispositif est illustré à la figure 1 et comprend une source de tension $E_1$ à basse impédance destinée à fournir le courant d'usinage nécessaire pour entretenir l'étincelage entre une électrode O et une pièce à usiner P séparées par une fente de travail ou gap G. Cette source $E_1$ est stabilisée à une tension $U_1$ réglable et capable de fournir de grandes intensités de courant sans baisse importante de tension et ajustable avec une bonne résolution.

La borne positive de la source $E_1$ est reliée à l'électrode O par une branche $B_1$ comprenant, en série, une source auxiliaire $E_2$ de tension, un premier interrupteur $S_1$ sous forme d'un transistor par exemple, un premier organe de mesure $M_1$ du courant $I_1$, tel qu'une résistance de mesure, une bobine de self-induction $L_1$ constituant un accumulateur magnétique d'énergie, un second interrupteur $S_2$, sous forme d'un transistor par exemple, un second organe de mesure $M_2$ du courant $I_2$ et une diode $D_4$, $L_2$ représentant l'inductance parasite de ligne.

La borne négative de la source auxiliaire $E_2$ est reliée à l'interrupteur $S_2$ par une branche $B_2$ comportant une diode $D_2$.

La borne négative de la source $E_1$ est reliée par une branche $B_3$ à la pièce P.

Le circuit comprend, en outre, un condensateur $C_1$ et un potentiomètre $T_1$, tous deux connectés en parallèle à la source $E_1$ entre les branches $B_2$ et $B_3$. La branche $B_3$ est en outre reliée par une diode $D_3$ à la jonction entre l'interrupteur $S_2$ et l'organe de mesure $M_2$. Un second potentiomètre $T_2$ est relié entre l'électrode O et la pièce P pour mesurer le potentiel $U_g$ à travers le gap G. Une diode $D_1$ relie en outre la branche $B_3$ à la sortie de l'interrupteur $S_1$.

Le mode d'exécution comprend en plus un circuit d'amorçage $B_4$ des décharges érosives branché en parallèle entre l'électrode et la pièce à la sortie de la diode $D_4$ et à la pièce P.

Ce circuit d'amorçage $B_4$ comprend un générateur d'amorçage $E_3$, une résistance $R_3$, un interrupteur $S_3$, une diode $D_5$ et un organe de mesure $M_3$ d'un courant $I_3$.

L'ensemble de ce circuit est commandé et contrôlé par une unité de contrôle électronique CP recevant des signaux de mesure des éléments $M_1$, $M_2$, $M_3$, $T_1$ et $T_2$ et adressant des signaux de commande aux éléments $E_1$, $S_1$, $S_2$ et $S_3$.

Les valeurs des différents composants pourront typiquement être les suivantes :

Source $E_1$ entre 25 et 50 V pour une puissance de 2 kW, source $E_2$ de l'ordre de 5 V, source $E_3$ de l'ordre de 100 V pour une puissance de 300W, bobine $L_1$ environ 120 µH, inductance $L_2$ de l'ordre de 2 µH, résistance $R_3$ environ 50 Ohms et condensateur $C_1$ environ 10 µF. De préférence, l'impédance des deux sources de tension $E_1$ et $E_2$ est nulle.

Le fonctionnement du circuit selon la figure 1 est expliqué ci-après. Les états conducteurs et non conducteurs des interrupteurs ou transistors $S_1$, $S_2$ et $S_3$ sont commandés par l'unité de commande CP.

Un cycle d'usinage est constitué par une période d'amorçage TD, une période d'étincelage TA et une période de pause TB. En période de pause TB, les interrupteurs $S_2$ et $S_3$ sont ouverts. Pendant cette période, la source $E_2$ permet d'accumuler de l'énergie dans la bobine de self-induction $L_1$. Lorsque l'interrupteur $S_1$ ferme, la source $E_2$ charge la bobine de self-induction par la boucle $E_2$, $S_1$, $M_1$, $D_2$. Lorsque le courant $I_1$ mesuré par l'organe de mesure $M_1$ atteint une première valeur prédéterminée, par exemple 2,5 Amp., l'interrupteur $S_1$ est ouvert et le courant I1 diminue dans un circuit de relaxation $L_1$, $D_2$, $E_1$, $D_1$, $M_1$ jusqu'à une seconde valeur prédéterminée. Ainsi, pendant la période de pause, le courant $I_1$ peut être réglé par l'unité de commande CP au moyen de la durée d'ouverture et de fermeture de l'interrupteur $S_1$.

La période d'amorçage est obtenue en fermant simultanément les interrupteurs $S_2$ et $S_3$. La source $E_3$ à haute impédance crée une tension élevée $U_g$ à travers le gap G mesurée par le potentiomètre $T_2$.

L'instant de l'amorçage est détecté par le passage d'un courant $I_3$ dans l'organe de mesure $M_3$. Lorsque l'amorçage est intervenu, la période d'étincelage débute et l'unité de commande CP active l'organe de mesure $M_2$. La période d'étincelage commence par une phase transitoire de montée en courant pendant laquelle le courant d'étincelage s'établit. Aussi longtemps que le courant $I_1$ mesuré par l'organe de mesure $M_1$ est supérieur au courant $I_2$ parcourant l'organe de mesure $M_2$, la diode $D_2$ est débloquée. Pendant cette phase transitoire de montée en courant, il existe donc la relation dI2/dt =$(U_1 - U_g)/L_2$

où

$U_1$ est la tension aux bornes de la source $E_1$,

$U_g$ la tension instantanée d'une décharge érosive à travers le gap G et $L_2$ l'inductance de ligne.

Lorsque le courant $I_2$ est égal au courant $I_1$, la diode $D_2$ est bloquée et on quitte la phase transitoire pour entrer dans une phase à mode régulé dans laquelle le courant $I_2$ est maintenu entre des limites prédéterminées Ip et Ip - Δ par ouverture et fermeture de l'interrupteur $S_1$ en suivant la boucle $E_1$, $E_2$, $S_1$, $M_1$, $L_1$, $S_2$, $M_2$, $D_4$, $L_2$, gap à la montée. La diminution du courant s'effectue alors dans la boucle de relaxation $L_1$, $S_2$, $M_2$, $D_4$, $L_2$, gap, $D_1$, $M_1$. Ce mode régulé s'effectue alors pendant le reste de la période d'étincelage TA, les interrupteurs $S_2$ et $S_3$ étant fermés. L'interrupteur $S_3$ pourrait également être ouvert dès que l'amorçage d'une décharge se produit. Néanmoins, la fermeture de $S_3$ est préférable afin d'éviter une extinction prématurée de la décharge érosive.

A la fin d'une période d'étincelage TA, les interrupteurs $S_2$ et $S_3$ sont ouverts pour commencer une période de pause TB avec un courant $I_1$ réglé par fermeture et ouverture de l'interrupteur $S_1$ et un circuit de relaxation $L_2$, gap, $D_3$, $M_2$, $D_4$ pour le courant $I_2$.

Un aspect important de l'invention consiste en particulier à créer ledit mode transitoire avec un courant $I_2$ qui prend naissance sous l'effet de la source $E_1$ à basse impédance dont la tension $U_1$ peut être réglée, ajustée et asservie par l'intermédiaire de l'unité de commande CP selon la loi indiquée ci-dessus. Le mode de régulation et d'asservissement de cette source $E_1$ sera expliqué en détail ci-après.

Le départ du mode transitoire selon la loi ci-dessus s'effectue avec une valeur initiale de courant délivré par le générateur d'amorçage $E_3$.

La croissance du courant durant cette phase transitoire n'est possible que si $U_1 > U_g$ immédiatement après l'amorçage, durant toute la montée du courant et y compris durant le mode régulé. Quand la tension $U_1$ de la source $E_1$ est trop basse, c'est-à-dire que $U_1 < U_g$, alors la diode $D_4$ se bloque et la source $E_1$ ne débite aucun courant ; seul le courant fourni par le générateur d'amorçage $E_3$ circule dans la branche où se trouvent l'électrode et la pièce, courant largement inférieur à la valeur nécessaire pour que le mode régulé s'enclenche ou reste enclenché.

Si l'on fait varier lentement $U_1$ à partir d'une valeur basse, on peut observer les phénomènes décrits ci-après et qui sont à la base de l'invention.

En observant à l'aide d'un oscilloscope analogique la phase transitoire du courant, il est possible de voir un spectre de signaux dont on peut apprécier la largeur.

Avec des valeurs de $U_1$ inférieures à une valeur prédéterminée, par exemple à 18 Volts, le courant ne monte pas en dessus du courant fourni par le générateur d'amorçage, on n'observe alors pas de phase transitoire du courant.

Au-dessus de cette valeur prédéterminée commence à apparaître un spectre étroit de décharges qui montent et permettent au mode régulé de s'enclencher.

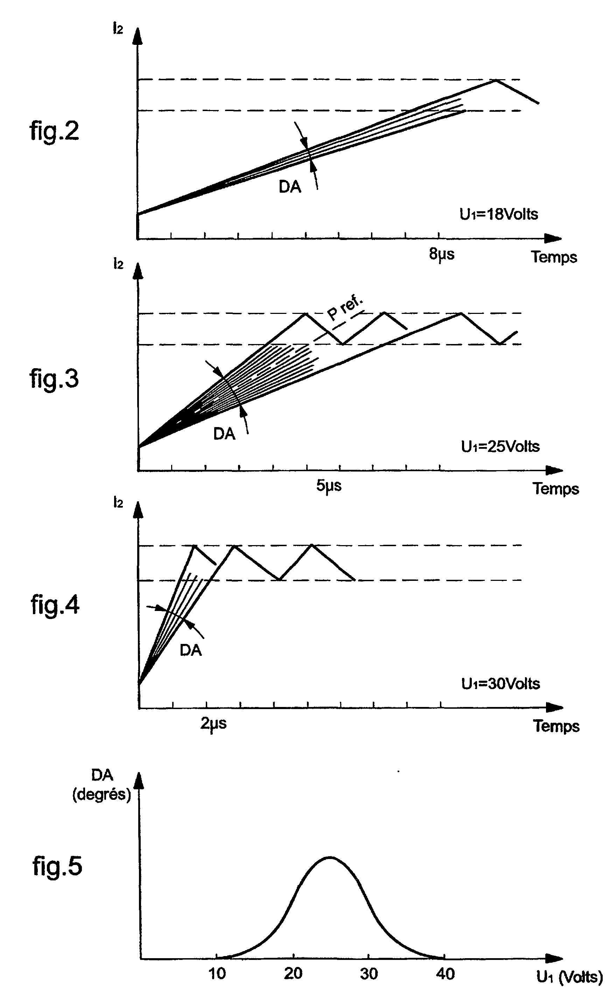

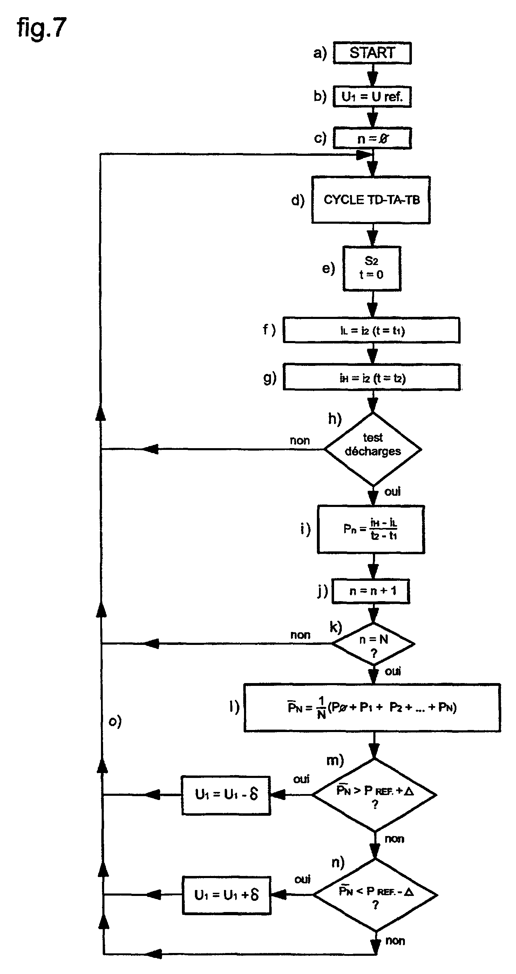

Le diagramme de la figure 2 montrant le courant $I_2$ en fonction du temps illustre ce spectre étroit avec une différence angulaire DA faible entre la valeur maximale de l'angle de pente AP max et la valeur minimale de l'angle de pente AP min.

$$DA = AP\ max - AP\ min$$

Au voisinage d'une seconde valeur de $U_1$ (fig. 3) voisine par exemple de 25 Volts, la pente moyenne de la montée en courant d$I_2$/dt s'accentue et le spectre s'élargit clairement. Au voisinage de cette seconde valeur de $U_1$, la dispersion des pentes de montée en courant des décharges est significativement plus grande et la différence angulaire DA = AP max - AP min est élevée.

En poursuivant progressivement l'augmentation de la tension $U_1$ de la source régulée $E_1$, on constate (fig. 4) que le spectre des pentes de montée en courant $I_2$/dt, donc la dispersion donnée par la différence angulaire DA, se rétrécit au-delà d'une troisième valeur de la tension $U_1$, dans l'exemple choisi 30 Volts, tandis que la pente moyenne de la montée en courant $I_2$/dt s'accentue encore considérablement.

Si l'on illustre (fig. 5) ladite largeur du spectre par la dispersion de l'angle de pente donnée par la valeur DA = AP max - AP min en fonction de la tension $U_1$ de la source régulée $E_1$, on remarque que cette dispersion passe par une valeur maximale pour une valeur de $U_1$ donnée.

Des essais technologiques effectués à diverses valeurs de $U_1$ ont permis de montrer que l'usure de l'électrode est minimale lorsque $U_1$ est réglée au voisinage du maximum de la valeur DA = AP max - AP min. On cerne la valeur optimale de $U_1$ = Uref au moyen d'essais technologiques préalables, et ceci en mesurant et en comparant les usures respectives de l'électrode dans chaque cas. A cette valeur optimale de tension Uref correspond également une pente moyenne optimale Pref de montée en courant $I_2$/dt. On peut retrouver le même réglage en réglant $U_1$ de sorte à obtenir la pente moyenne optimale Pref de courant correspondant à la valeur optimale de Uref.

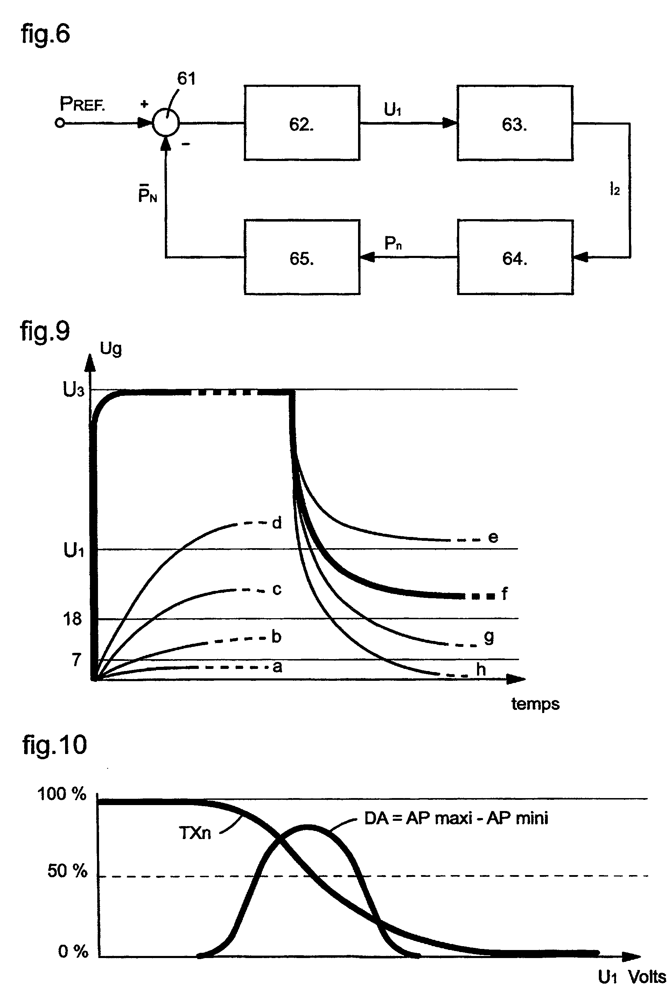

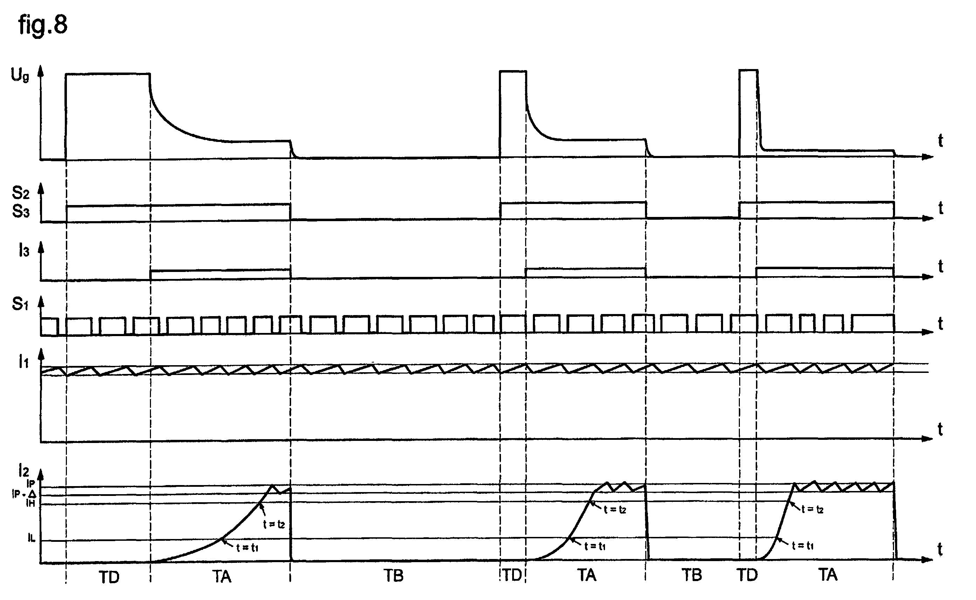

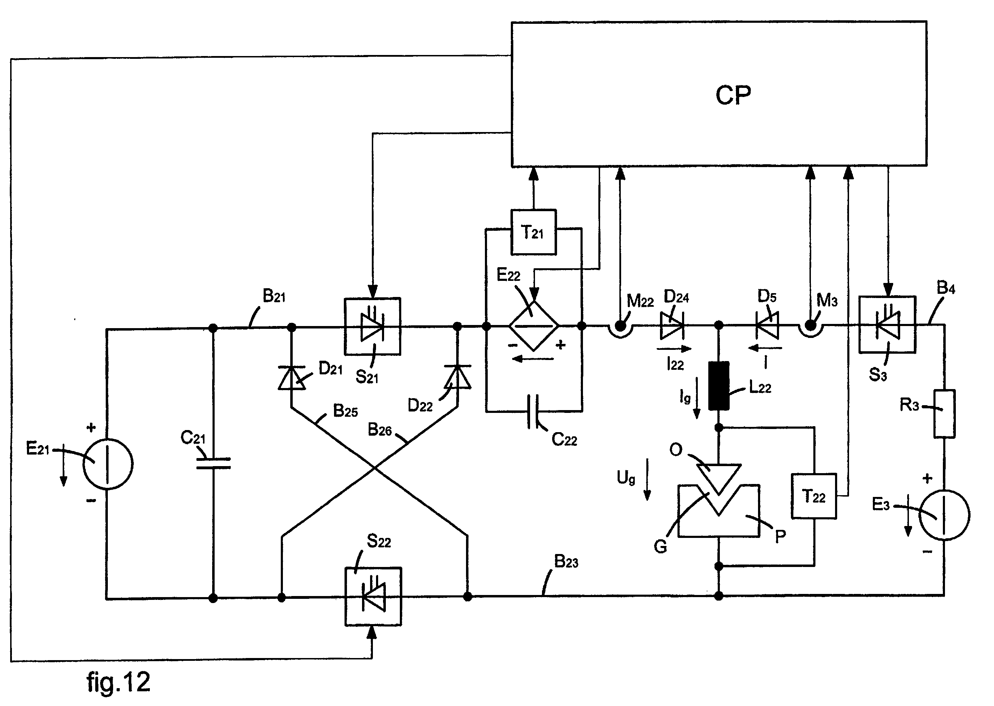

En mesurant d'une manière permanente la pente de montée Pn du courant des décharges durant leur phase transitoire, on en déduira une pente moyenne $\bar{P}_N$. que l'on comparera à une pente moyenne optimale de référence Pref correspondant au réglage optimal de $U_1$ selon le schéma illustré à la figure 6.

Cette valeur maximale de la dispersion angulaire DA est établie expérimentalement pour un type d'équipement et de matériaux donnés et correspond à une pente moyenne optimale de référence Pref que l'on utilise dans le schéma de réglage pour l'asservissement de la pente de montée en courant (fig. 6).

Ce schéma de réglage comprend un organe de calcul 61 destiné à calculer la différence arithmétique entre la pente de référence préétablie Pref et la pente moyenne $\bar{P}_N$ sur N décharges retenues. Il comprend en outre un régulateur 62 de type proportionnel ou proportionnel-intégral de la tension interne $U_1$ de la source de tension $E_1$ à basse impédance, un dispositif générateur de décharges 63 tel que, par exemple celui décrit en référence à la figure 1 comportant une source de courant à basse impédance $E_1$, permettant de générer des impulsions de courant $I_2$, un élément 64 agencé de façon à déterminer la pente de montée en courant $P_n$ d'une décharge n, et un organe 65 déterminant la pente moyenne $\bar{P}_N$ sur un nombre N de décharges. Le régulateur 62 est agencé de façon à modifier la tension interne $U_1$ en fonction du résultat de cette différence arithmétique pour que la pente moyenne $\bar{P}_N$ corresponde à la pente de référence préétablie Pref. Il est bien entendu que les éléments 61, 62, 64 et 65 peuvent être intégrés aisément dans l'unité de commande CP sous forme informatique programmable.

La figure 7 illustre un organigramme destiné à l'asservissement de la pente moyenne de montée en courant $\bar{P}_N$ des décharges érosives. Un cycle d'asservissement comprend les étapes suivantes :

a) start,
b) fixer la tension $U_1$ de la source $E_1$ à une valeur initiale égale à la valeur de référence préétablie Uref,
c) donner à un compteur la valeur 0,
d) lancer un cycle de décharge avec une période d'amorçage TD, une période d'étincelage TA et une période de pause TB,
e) déclencher au début de la période d'étincelage un compteur de temps t avec une valeur initiale t = Ø à l'instant où l'on connecte la source $E_1$ au gap G, à savoir à la fermeture de l'interrupteur $S_2$,
f) lire le courant $I_2$ à $t_1$ pour obtenir une valeur $I_L$
g) lire le courant $I_2$ à $t_2$ pour obtenir une valeur $I_H$,
h) évaluation de l'étincelle si elle est retenue comme décharge érosive correcte ou non, selon les critères expliqués ci-après,
i) calculer la pente $P_n$ de la décharge retenue selon la formule $P_n = (I_H - I_L)/(t_2 - t_1)$,
j) augmenter le compteur n d'une unité,
k) tester si n = N, N étant un nombre prédéterminé de décharges retenues pour calculer la pente moyenne $\bar{P}_N$ de montée en courant,
l) calculer la pente moyenne $\bar{P}_N$,
m) tester si la pente $\bar{P}_N$ est supérieure à la pente de référence Pref additionnée d'un écart de réglage $\Delta$ et si oui diminuer la tension $U_1$ d'une valeur de réglage prédéterminée $\delta$,
n) tester si la pente $\bar{P}_N$ inférieure à la pente de référence Pref diminuée d'un écart de réglage $\Delta$ et si oui augmenter la tension $U_1$ de la valeur de réglage $\delta$ et
o) recommencer une nouvelle boucle d'asservissement avec une valeur Uref réglée.

Par ce schéma, la pente moyenne de montée en courant $\bar{P}_N$ des décharges érosives peut être asservie de façon à coïncider avec la pente de référence Pref préétablie correspondant à une usure minimale de l'électrode.

La figure 8 présente un séquencement en fonction du temps t des signaux obtenus avec le circuit de la figure 1, à savoir la tension mesurée $U_g$ à travers le gap, l'état ouvert ou fermé des interrupteurs $S_1$, $S_2$ et $S_3$, le courant $I_3$ circulant dans la branche d'amorçage $B_4$ mesuré par l'organe de mesure $M_3$, le courant $I_1$ mesuré par l'organe de mesure $M_1$ et le courant $I_2$ mesuré par l'organe de mesure $M_2$. Le courant $I_g$ parcourant le gap correspondant la somme des courants $I_2$ et $I_3$ n'est pas représenté. La première décharge figurant à gauche du diagramme illustre le cas d'une décharge normale retenue avec une tension $U_g$ à travers le gap dont la chute est relativement lente et la pente de la montée en courant de $I_2$ est assez faible.

Dès l'amorçage du courant $I_3$ à travers la branche $B_4$, la pente de montée du courant 12 due à la source $E_1$ pendant la phase transitoire est déterminée entre les temps $t_1$ et $t_2$. Suit ensuite la phase régulée de la décharge, lors de laquelle le courant $I_2$ est réglé entre des limites relativement étroites Ip et Ip - $\Delta$ obtenu par l'ouverture et la fermeture de l'interrupteur $S_1$.

La décharge illustrée au centre de la figure correspond à une décharge pour laquelle la chute de tension à travers le gap et la montée du courant $I_2$ s'effectuent à des valeurs intermédiaires.

La troisième décharge correspond à une décharge non retenue du fait que la chute de la tension $U_g$ et la

montée du courant $I_2$ sont beaucoup trop élevées. Cette décharge correspond soit à un court-circuit, soit à une décharge annonciatrice d'un arc. De telles décharges ne sont pas prises en compte pour le calcul de la pente dans l'organigramme de la figure 7 et écartées au moyen de l'unité de commande CP.

Ce principe de réglage est directement basé sur la mesure de la pente moyenne de montée du courant, mais d'autres variables sont corrélées à cette pente moyenne et peuvent être exploitées pour concevoir un dispositif de réglage différent.

A ce propos, il a été dit que la source $E_1$ ne débite aucun courant, autrement dit reste bloquée, quand sa tension $U_1$ est inférieure à Ug et que seul le courant fourni par le générateur d'amorçage circule dans le gap d'usinage. En faisant varier lentement $U_1$ à partir d'une valeur basse, on peut également observer que la probabilité de bloquer la source $E_1$ est corrélée à la pente moyenne des montées du courant. Ce constat permet de concevoir un autre dispositif de réglage de la tension $U_1$, cette fois basé sur le dénombrement des décharges qui ne permettent pas à la source $E_1$ de débiter.

Afin de détecter décharge après décharge ledit phénomène de blocage, il est possible très facilement à l'aide du capteur ou organe de mesure M2 du courant $I_2$ de tester et de mémoriser si la source $E_1$ a débité du courant ou bien est restée bloquée.

Seront retenues comme décharges bloquées toutes décharges n'ayant pas permis à la source régulée $E_1$ de débiter du courant durant la période où le générateur d'amorçage débite du courant, c'est-à-dire après l'instant d'amorçage.

Inversement, une décharge sera considérée comme non bloquée si elle a fait débiter du courant $I_2$ au moins une fois par la source $E_1$ durant la période où le générateur d'amorçage débite du courant.

En comptant les décharges bloquées, on établira périodiquement, par exemple toutes les secondes, un taux TXn de ces décharges dites bloquées par rapport à la totalité des décharges. Connaissant le nombre de décharges non bloquées Dn et le nombre de décharges bloquées Db de la période de comptage, ce taux TXn sera calculé dans l'unité de commande CP selon la formule : TXn = 100 · Db / (Db + Dn).

La mise en évidence des décharges bloquées permet donc de concevoir différemment un dispositif de réalisation de l'invention.

Toutefois, d'autres types de décharges bien connus peuvent se produire lorsque les conditions d'usinage se détériorent. On voit apparaître en plus ou moins grand nombre par exemple des courts-circuits, des décharges annonciatrices d'un arc ou encore des décharges dites contaminées.

Ces différentes catégories de décharges peuvent être repérées dans les instants qui suivent l'amorçage et ceci en observant les transitions de la tension $U_g$ entre électrode O et pièce P, soit en observant le comportement du courant $I_2$ à l'aide du capteur $M_2$, ce qui permet de les discriminer et de les exclure lors de la formation TXn.

La figure 9 illustre à titre d'exemple 4 zones de tension $U_g$ mesurées à travers le gap :

1) de 0 à environ 7 V: les courts-circuits
2) de 7 V à environ 18 V : des décharges annonciatrices d'un arc
3) de 18 V à environ $U_1$, à savoir la tension de la source à basse impédance $E_1$ : les étincelles efficaces ou décharges retenues dans les statistiques
4) de $U_1$ jusqu'à $U_3$, à savoir la tension délivrée par générateur d'amorçage GA : les décharges bloquées.

Lorsque la tension d'amorçage $U_3$ délivrée par le générateur $E_3$ est appliquée à la fin du temps de pause, l'amorçage peut se faire immédiatement. C'est-à-dire le générateur $E_3$ se met à débiter immédiatement du courant tel qu'illustré par les transitions a, b, c ou d de la figure 9 selon les conditions d'usinage. Pour respecter le principe de l'invention, il sera préférable d'exclure ces types a,b,c,d des statistiques.

L'amorçage est néanmoins généralement retardé. La tension $U_g$ monte alors à la valeur de la tension $U_3$. Un temps d'attente s'écoule avant l'amorçage illustré par les transitions e, f, g ou h de la figure 9 également possibles.

Seules les transitions de type f signalent des étincelles efficaces susceptibles d'être observées et retenues dans les statistiques afin de former la pente moyenne $\bar{P}_N$. Tous les autres cas de transition, à savoir les transitions de type a) à e), g) et h), ne sont pas utilisés pour calculer la pente moyenne $\bar{P}_N$.

Il est bien entendu que d'autres moyens de discrimination des décharges indésirables, et en particulier des décharges contaminées, peuvent être envisagés. Pour donner un autre exemple, on peut discriminer en observant la pente de montée du courant. Des pentes excessives, au-delà d'une certaine limite, signalent que le passage du courant se fait en l'absence de force contre-électromotrice dans le gap, c'est-à-dire en présence d'un diélectrique devenu résistif ou contaminé ou encore en présence d'un court-circuit.

En faisant varier la tension $U_1$ de la source $E_1$, on constate que l'on peut bloquer une part plus ou moins grande de la population des étincelles efficaces comme cela est illustré à la figure 10. Cette figure montre une corrélation entre le taux de décharges retenues, mais bloquées TXn, et la valeur DA correspondant à la différence angulaire de la dispersion du spectre des pentes de montée en courant des décharges retenues.

Par suite, en calculant périodiquement le taux TXn et en le comparant à un taux optimal TXref de décharges bloquées, on peut concevoir un régulateur de la tension $U_1$ de la source $E_1$ comme le symbolise l'organigramme de la figure 11.

Ce schéma de réglage comprend un organe de calcul 61a destiné à calculer la différence arithmétique entre un taux de référence préétabli TXref de décharges bloquées et le taux de décharges bloquées obtenues après N décharges retenues, un régulateur 62a permettant d'augmenter ou de diminuer la tension $U_1$ de la source de tension $E_1$ à basse impédance d'une valeur de réglage δ donnée, un dispositif générateur de décharges 63 permettant de générer des impulsions de courant $I_2$ et un dispositif 64a agencé de façon à déterminer et à calculer le taux de décharges bloquées TXn pour un nombre N de décharges retenues. Les éléments 61a, 62a et 64a pourront au moins partiellement être intégrés dans l'unité de commande CP. Le régulateur 62a est bien entendu agencé de façon à modifier la tension interne $U_1$ en fonction de la différence arithmétique pour que le taux de décharges bloquées TXn corresponde au taux de référence TXref.

Ce schéma de réglage permet d'effectuer un asservissement de la montée en courant des décharges érosives au moyen de boucles successives en lançant un cycle d'usinage TD, TA, TB avec la tension interne $U_1$ fixée à une valeur initiale correspondant à une tension de référence Uref préétablie. On écarte alors par un test de discrimination des décharges non désirées, à savoir contaminées, de courts-circuits et d'arcs. Puis on détecte les décharges bloquées. Ce cycle est parcouru n = N fois et on calcule alors le taux TXn de décharges bloquées que l'on compare à un taux de référence TXref préétabli correspondant à une usure minimale. Selon les résultats, on diminue, respectivement on augmente, la tension interne $U_1$ d'une valeur de réglage δ, si le taux calculé est inférieur au taux de référence diminué d'un écart de réglage Δ, respectivement supérieur au taux de référence augmenté de l'écart de réglage Δ pour obtenir une nouvelle valeur initiale de la tension interne $U_1$ avec laquelle on recommence une nouvelle boucle d'asservissement.

Le mode d'exécution de circuit illustré à la figure 12 comprend également une source de tension $E_{21}$ à basse impédance destinée à fournir en partie le courant d'usinage nécessaire pour entretenir les décharges érosives. Cette source $E_{21}$ possède une tension continue stabilisée à une tension $U_1$ et est capable de fournir de grandes intensités de courant, sans baisse importante de tension. La borne positive de la source $E_{21}$ est reliée à l'électrode O par une branche $B_{21}$ comprenant, en série, un interrupteur $S_{21}$, une source additionnelle de tension $E_{22}$ à basse impédance dont la tension $U_{22}$ peut être réglée et ajustée avec une bonne résolution, un organe de mesure $M_{22}$ du courant $I_{22}$ parcourant cette branche, une diode $D_{24}$, $L_{22}$ représentant l'inductance parasite de ligne.

La borne négative de la source de tension $E_{21}$ est reliée par une branche $B_{23}$ à la pièce P séparée par le gap G de l'électrode O. Cette branche $B_{23}$ comprend un interrupteur $S_{22}$. Les branches $B_{21}$ et $B_{23}$ sont en outre reliées par une branche $B_{25}$ comportant une diode $D_{21}$ et une branche $B_{26}$ comportant une diode $D_{22}$, la branche $B_{25}$ étant connectée aux entrées des deux interrupteurs $S_{21}$ et $S_{22}$, tandis que la branche $B_{26}$ est reliée aux sorties des deux interrupteurs $S_{21}$ et $S_{22}$. Les deux branches $B_{25}$ et $B_{26}$ sont ainsi agencées de façon croisée entre les deux branches $B_{21}$ et $B_{23}$ portant les interrupteurs $S_{21}$ et $S_{22}$.

Comme le mode d'exécution de la figure 1, un circuit d'amorçage $B_4$ est branché en parallèle entre l'électrode et la pièce et comprend un générateur d'amorçage $E_3$, une résistance $R_3$, un interrupteur $S_3$, une diode $D_5$ et un organe de mesure $M_3$ du courant $I_3$.

Le circuit comprend en outre un condensateur $C_{21}$ connecté en parallèle à la source $E_{21}$ et un condensateur $C_{22}$ reliant les bornes de la source additionnelle $E_{22}$. Un potentiomètre $T_{21}$ est en outre branché aux bornes de la source additionnelle $E_{22}$ et un autre potentiomètre $T_{22}$ à l'électrode O et la pièce P pour mesurer la tension $U_g$ à travers le gap G.

L'ensemble de ce circuit est commandé par une unité de contrôle électronique CP recevant des signaux de mesure des éléments $M_{22}$, $M_{31}$, $T_{21}$ et $T_{22}$ et adressant des signaux de commande aux éléments $E_{22}$, $S_{21}$, $S_{22}$ et $S_3$.

Les valeurs des différents composants pourront typiquement être les suivants :

La source $E_{21}$ de l'ordre de 15 V pour une puissance de 1 kW, la source additionnelle $E_{22}$ réglable entre 10 et 40 V pour une puissance de 1 kW, la source $E_3$ de l'ordre de 100 V pour une puissance de 300 W, l'inductance $L_{22}$ environ 2 μH, la résistance $R_3$ environ 50 ohms et les condensateurs $C_{21}$ et $C_{22}$ environ 10 μF. De préférence, l'impédance de la source de tension additionnelle $E_{22}$ est nulle.

Le fonctionnement du circuit selon la figure 12 est le suivant : En période de pause TB, les deux interrupteurs $S_{21}$ et $S_{22}$ sont ouverts et l'énergie accumulée dans l'inductance $L_{22}$ se dissipe sous forme d'un courant qui débloque les deux diodes $D_{21}$ et $D_{22}$. On obtient le circuit de relaxation $L_{22}$, gap, $D_{21}$, source $E_{21}$ à l'envers, $D_{22}$, $E_{22}$, $M_{22}$, $D_{24}$. Il est bien entendu que la source $E_{21}$ peut supporter sans dommage un courant qui le traverse en allant de la borne positive à la borne négative tout en restituant à cette source une partie de l'énergie accumulée dans l'inductance. Dans ces conditions, la source $E_{21}$ freine le courant avec la pente :

$$dI_2/dt = (-U_{21} + U_{22} - U_g)/L_{22}$$

où $U_{21}$ et $U_{22}$ sont les tensions des sources $E_{21}$ et $E_{22}$

$U_g$ est la tension à travers le gap

La période d'amorçage est obtenue en fermant l'interrupteur $S_3$. La source $E_3$ à haute impédance crée une tension élevée à travers le gap G mesurée par le potentiomètre $T_{22}$. Lorsque l'amorçage est intervenu, le circuit permet de choisir entre deux modes d'usinage se différenciant dans la phase transitoire de montée du courant $I_2$, à savoir avec une pente de montée du courant $I_2$ faible à modérée ou une pente de montée du courant $I_2$ forte.

Le premier mode avec une phase transitoire à faible pente $dI_2/dt$ est obtenu en fermant l'un des interrupteurs $S_{21}$ ou $S_{22}$, l'autre interrupteur restant ouvert. La montée en courant s'effectue alors sous l'effet de la source addition-nelle $E_{22}$ dont la tension $U_{22}$ est réglée par l'unité de commande CP. Les circuits de charge sont soit $E_{22}$, $M_{22}$, $L_{22}$, gap, $D_{21}$ et $S_{21}$ fermé, soit $E_{22}$, $M_{22}$, $L_{22}$, gap, $S_{22}$ fermé et $D_{22}$.

Le courant $I_2$ s'établit avec une pente $P_n = dI_2/dt = (U_{22} - U_g)/L_{22}$.

Si la tension à vide $U_{22}$ de la source additionnelle $E_{22}$ est légèrement plus grande que la tension $U_g$ de décharge et qu'un seul transistor conduit, on obtient ainsi une faible pente positive dans une phase transitoire de montée lente. Il est également possible d'obtenir une phase de descente lente avec U22 légèrement inférieur à $U_g$. Lorsque $U_{22}$ est égal à 0, c'est-à-dire sans la source additionnelle $E_{22}$, objet de l'invention, cette phase de descente devient une descente rapide.

D'autres pentes peuvent être commutées en un temps très court, de l'ordre de la microseconde, grâce à des signaux envoyés par l'unité de commande CP aux interrupteurs $S_{21}$, $S_{22}$. Dans une phase de montée rapide, les deux transistors $S_{21}$ et $S_{22}$ sont dans l'état conducteur, les diodes $D_{21}$ et $D_{22}$ sont bloquées et si une décharge a éclaté auparavant entre l'électrode O et la pièce P le circuit se ferme au travers de l'ensemble électrode-pièce. Dans ces conditions, l'intensité du courant croît rapidement avec la pente :

$$P_n = dI_2/dt = (U_{21} + U_{22} - U_g)/L_{22}$$

L'unité de commande CP est réalisée selon les techniques digitales connues, de préférence avec un système à microprocesseur. Elle assume une série de tâches logiques, dont la première est de piloter le courant en envoyant des signaux du type « tout ou rien » aux interrupteurs de manière à générer approximativement une impulsion de courant de forme voulue.

Elle assure également le réglage et l'asservissement de la tension $U_{22}$ du générateur additionnel $E_{22}$, par exemple selon le schéma de réglage représenté à la figure 6, et fonctionnant conformément à l'organigramme de la figure 7. Le circuit représenté à la figure 12 permet donc de générer des décharges érosives similaires à celles illustrées à la figure 8 avec une phase transitoire lors de laquelle la pente P de montée en courant des décharges est asservie pour correspondre à une pente de référence Pref préétablie et ensuite avec une phase à mode régulé pendant laquelle le courant des décharges $I_2$ est ajusté à une valeur de consigne Ip.

Le mode d'exécution de la figure 12 permet donc d'obtenir différents types de montées et descentes de courant. Pour fixer les idées, quelques exemples numériques sont indiqués ci-après : pour les valeurs $U_{21} = 15$ V, $U_g = 20$ V, $L_{22} = 2\mu H$.

| Phase | $S_{21}$ | $S_{22}$ | $L_{22} \times dI_2/dt$ | $U_{22}$ | $L_{22} \times dI_2/dt$ | $dI_2/dt$ |
|---|---|---|---|---|---|---|
| Montée lente | 1 | 0 | $U_{22} - U_g$ | 25 | 5 | 2,5 A/μs |
| Montée rapide | 1 | 1 | $U_{21} + U_{22} - U_g$ | 25 | 20 | 10A/μs |
| Descente | 0 | 0 | $-U_{21} + U_{22} - U_g$ | 25 | -10 | -5A/μs |
| Descente lente | 1 | 0 | $U_{22} - U_g$ | 15 | -5 | -2,5/μs |
| Descente rapide | 0 | 0 | $-U_{21} + U_{22} - U_g$ | 0 | -35 | -17,5/μs |

Dans un régime de très faible usure, on établit la montée du courant lente en fermant seulement un des interrupteurs $S_{21}$ ou $S_{22}$ et en réglant $U_{22}$ de façon que la pente moyenne $\bar{P}_N$ corresponde donc à Pref lors de la phase transitoire en commençant avec une tension Uref préétablie pour le générateur additionnel $E_{22}$. Une fois la valeur de consigne Ip du courant $I_2$ atteinte, on passe dans la phase à mode régulé dans laquelle on maintient le courant $I_2$ entre les limites Ip et Ip $- \Delta$ en ouvrant et en fermant l'un, l'autre ou les deux interrupteurs $S_{21}$, $S_{22}$.

Ce circuit permet donc une grande flexibilité d'application à des réglages variés des pentes de montée et de descente du courant d'usinage. Il est bien entendu que les moyens de réglage et d'asservissement expliqués en référence aux figures 2 à 7, 10 et 11 s'appliquent directement en agissant sur la tension $U_{22}$ de la source de tension additionnelle $E_{22}$.

EP 1 063 043 B1

Les modes d'exécution précédemment décrits sont avantageusement accompagnés dans une variante par un dispositif de protection anti-courts-circuits SPAC, tel que celui illustré à la figure 13.

On a constaté qu'un grand nombre des ponts métalliques qui se forment dans l'espace d'étincelage durant les usinages de finition sont suffisamment fragiles pour être détruits par fusion par le passage d'une impulsion de courant particulière qui s'ajoute au courant d'usinage normal et qui permet le réamorçage de l'effet érosif. On obtient ainsi une augmentation spectaculaire du rendement d'usinage par rapport à celui obtenu par les méthodes classiques qui consistent à arrêter le courant d'impulsion et à attendre la rupture du pont métallique par étirement sous l'effet du retrait de l'électrode.

L'impulsion de courant destinée à rompre le pont métallique n'est pas appliquée immédiatement après le constat du court-circuit, mais un délai de l'ordre de la microseconde est nécessaire avant d'injecter à impédance minimale un courant plusieurs fois supérieur au courant nominal d'usinage. La durée d'application est de quelques microsecondes avant que le réamorçage n'intervienne dans la majorité des cas. Si ce n'est pas le cas, il est inutile de maintenir un fort courant plus longtemps car cela signifie que le court-circuit est dû à un contact direct entre les deux électrodes.

C'est pourquoi il est possible de réaliser un tel dispositif à l'aide d'une simple capacité $C_{31}$ de forte valeur, par exemple de 10 µF, branchée aux bornes du générateur d'amorçage $E_3$. La charge a le temps de s'effectuer durant l'intervalle entre deux amorçages successifs. Ladite capacité $C_{31}$ se déchargera sur le câble d'usinage par l'intermédiaire d'un interrupteur $S_{31}$ et d'une diode $D_{31}$ supplémentaires comme l'indique le schéma de la figure 13. L'interrupteur $S_{31}$, par exemple sous forme d'un transistor, est commandé par l'unité de commande CP lorsque celle-ci détecte un court-circuit comme précédemment décrit en référence à la figure 9.

Un tel dispositif de protection anti-court-circuit SPAC peut être installé en parallèle sur tout type de circuit d'électroérosion. Il devient particulièrement important de le mettre en oeuvre dans les dispositifs qui permettent de réaliser la présente invention car une montée lente du courant d'usinage défavorise l'effet fusible sur les ponts métalliques.

Il est bien entendu que d'autres types de dispositifs d'usinage par électro-érosion pourront être adaptés à la mise en oeuvre de la présente invention et devrait comprendre à cet effet des moyens de réglage permettant d'influencer la montée en courant du courant d'usinage au moins pendant la phase transitoire ou initiale des décharges. On pourrait par exemple utiliser un générateur à limitation de courant par résistance, mais perfectionné par l'adjonction d'une source auxiliaire de tension à basse impédance agissant en début de décharge, de manière à pouvoir produire des impulsions comme montré à la figure 8. On pourrait également adapter un circuit connu sur le nom de convertisseur DC-DC, mais piloté de manière à ce qu'en début de décharge il soit équivalent à une source auxiliaire de tension à basse impédance.

Le procédé employé dans tous ces dispositifs est cependant similaire et se caractérise par le fait que l'on effectue un réglage de la montée en courant des impulsions ou décharges électriques après l'amorçage d'une décharge entre l'électrode et la pièce. Ce réglage est effectué de façon qu'un paramètre lié à cette montée en courant, tel que la pente de la montée P ou le taux de décharges bloquées TXn ou la tension réglable $U_1$, $U_{22}$, soit sensiblement égal à une grandeur de référence correspondant à une valeur d'usure minimale de l'électrode-outil. Cette grandeur de référence pourra être une pente de référence, un taux de référence des décharges bloquées, une tension interne de référence, etc, déterminée préalablement en laboratoire ou sur le site de production. Le résultat surprenant des mesures d'usure dans l'expérience, qui consiste à faire varier graduellement la tension interne $U_1$, $U_{22}$ de la source de tension réglable, est qu'il existe un minimum de l'usure dans une étroite plage de tensions, là où apparaît une très forte dispersion dans les pentes de montée du courant d'usinage lors de la phase transitoire.

On peut donc faire une série d'essais technologiques pour charger une table qui donne une valeur optimale ou de référence de cette tension interne de la pente ou encore du taux de décharges bloquées pour chaque régime d'usinage à très faible usure considéré, un régime d'usinage étant défini par exemple par le courant d'usinage Ip, les temps d'amorçage TD, d'usinage TA et de pause TB, le couple de matériaux utilisés, etc. Un réglage du dispositif d'usinage avec ces paramètres préétablis peut donner de bons résultats en ce qui concerne l'usure. Toutefois, le point de réglage est tellement critique que les bons résultats de laboratoires peuvent ne pas être atteints sur le terrain. Divers facteurs peuvent jouer un rôle, comme la température et les tolérances plus ou moins étroites des éléments lors d'une production en série. Mais la dispersion la plus importante provient de l'inductance parasite de ligne, qui peut varier dans des grandes proportions, par exemple du simple au triple suivant le câblage interne du dispositif et la longueur de la ligne. Un asservissement permet de s'affranchir de ces dispersions et d'obtenir un dispositif industriel capable de reproduire sur le terrain les meilleurs résultats en usure.

Cet asservissement peut s'effectuer au moyen d'une boucle d'asservissement de manière qu'une grandeur statistique représentative dudit paramètre, tel que la pente de montée du courant ou le taux des décharges bloquées, coïncide avec la grandeur de référence prédéterminée.

Il est donc possible de mettre en mémoire des tables de technologie qui contiennent pour chaque régime non seulement une valeur Uref qui fixe la toute première valeur de la tension $U_1$, $U_{22}$ de la source de tension réglable, mais encore une valeur Pref qui sert de référence pour la pente moyenne $\bar{P}_N$ des montées de courant, pente qui est le résultat de mesures en temps réel. La valeur optimale de Pref qui donne la très faible usure est le résultat d'essais technologiques effectués au préalable pour charger la mémoire de l'unité de commande CP. L'asservissement vie à faire varier la tension $U_1$, $U_{22}$ de manière à corriger tout écart entre $\bar{P}_N$ et Pref; par exemple, si la pente moyenne $\bar{P}_N$ est plus petite que la pente de référence Pref, alors on augmente par incréments la tension $U_1$, $U_{22}$, ce qui a pour effet d'engendrer des montées de courant plus raides, et le processus se poursuit jusqu'à ce que l'on ait pratiquement PN = Pref. (voir figures 6 et 7).

L'unité de commande CP possède des capacités de traitement rapide de l'information, réalisées de manière connue avec l'électronique digitale, par exemple avec un microprocesseur. Pour lancer une impulsion du type « Très faible usure », on envoie à l'unité de commande une série de directives, notamment les valeurs de Ip, TD, TA, TB, Uref et Pref.

L'asservissement est alors appliqué durant tout l'usinage ou durant une phase initiale. On peut éventuellement se contenter de former une grandeur représentative de la pente moyenne, qui soit plus simple et plus rapide à calculer, par exemple en posant t1 = 0, autrement dit en calculant la moyenne des courants mesurés en $t_2$. L'important est que les tests préliminaires technologiques et que les asservissements sur les machines utilisent la même façon de définir la grandeur statistique représentative. Dans ces conditions, on peut même utiliser le plus grand courant i observé au temps $t_2$ sur une série de décharges.

Il est bien entendu que l'asservissement s'effectue de façon similaire avec d'autres paramètres, tels que le taux des décharges bloquées. Les grandeurs de références peuvent également être prédéterminées expérimentalement, par exemple en effectuant des mesures de poids ou dimensionnelles de l'électrode-outil.

Il est bien entendu que les modes de réalisation décrits ci-dessus ne présentent aucun caractère limitatif et qu'ils peuvent recevoir toute modification désirable à l'intérieur du cadre tel que défini par les revendications indépendantes.

## Revendications

**1.** Procédé d'usinage par électroérosion, selon lequel on usine une électrode-pièce (P) au moyen d'une électrode-outil (O) séparées l'une de l'autre par un espage de travail (G) en appliquant des impulsions électriques entre l'électrode-outil et l'électrode-pièce au moyen d'un circuit électrique comportant au moins une source de tension à basse impédance ($E_1$, $E_{22}$) et d'un circuit de régulation (CP), **caractérisé par le fait que** l'on effectue un réglage de la montée en courant des impulsions électriques en fonction du temps après l'amorçage d'une décharge entre l'électrode-outil et l'électrode-pièce de façon qu'un paramètre ($\bar{P}_N$, TXn) lié à cette montée en courant soit sensiblement égal à une grandeur de référence (Pref, TXref) correspondant à une valeur d'usure minimale de l'électrode-outil.

**2.** Procédé selon la revendication 1, **caractérisé par le fait que** l'on effectue le réglage de la montée en courant des impulsions électriques durant une première phase transitoire et que l'on maintient dans une deuxième phase le courant d'usinage à au moins une valeur de consigne (Ip) dès que la montée en courant a atteint cette valeur de consigne (Ip).

**3.** Procédé selon la revendication 1 ou 2, **caractérisé par le fait que** le réglage de la montée en courant est effectué au moyen d'une boucle d'asservissement de manière qu'une grandeur statistique ($\bar{P}_N$, TXn ) représentative dudit paramètre coïncide avec ladite grandeur de référence (Pref, TXref) prédéterminée.

**4.** Procédé selon l'une des revendications précédentes, **caractérisé par le fait que** ledit réglage est effectué en agissant sur la tension interne réglable ($U_1$, $U_{22}$) d'au moins une source de tension réglable ($E_1$, $E_{22}$) à basse impédance.

**5.** Procédé selon les revendications 1 et 4, **caractérisé par le fait que** la grandeur de référence (Pref) correspondant à une valeur d'usure minimale est déterminée en faisant varier la tension interne ($U_1$, $U_{22}$) de la source de tension réglable ($E_1$, $E_{22}$) et en observant la dispersion du spectre des angles de pente (DA) de montée en courant d'un nombre donné de décharges.

**6.** Procédé selon la revendication 5, **caractérisé par le fait que** la grandeur de référence (Pref) est obtenue lorsque la dispersion du spectre des angles de pente (DA) est sensiblement maximum.

**7.** Procédé selon l'une des revendications précédentes, **caractérisé par le fait que** ledit paramètre est la pente

moyenne ($\bar{P}_N$) de montée du courant d'usinage, réglé de façon à coïncider avec une pente de référence (Pref) préétablie à usure minimale de l'électrode-outil.

**8.** Procédé selon les revendications 3, 4 et 7, **caractérisé par le fait que** l'on effectue un asservissement d'une pente moyenne de montée en courant ($\bar{P}_N$) des décharges érosives au moyen de boucles d'asservissement successives, en lançant un cycle d'usinage (TD, TA, TB) avec ladite tension interne ($U_1$, $U_{22}$) fixée à une valeur initiale correspondant à une tension de référence (Uref) préétablie, en écartant par un test de discrimination les décharges contaminées, de courts-circuits et d'arcs, en déterminant la pente de montée en courant (Pn) des décharges retenues, en effectuant n = N cycles d'usinage, en calculant la pente moyenne de montée en courant ($\bar{P}_N$) sur les N décharges retenues, en comparant la pente moyenne de montée en courant ($\bar{P}_N$) obtenue à ladite pente de référence (Pref), en diminuant, respectivement en augmentant la tension interne ($U_1$, $U_{22}$) d'une valeur de réglage prédéterminée ($\delta$), si la pente moyenne ($\bar{P}_N$) calculée est supérieure à la pente de référence (Pref) additionnée d'un écart de réglage ($\Delta$), respectivement inférieure à la pente de référence (Pref) diminuée de cet écart de réglage ($\Delta$), de façon à obtenir une nouvelle valeur initiale de ladite tension interne ($U_1$, $U_{22}$), et en effectuant des boucles d'asservissement successives avec les nouvelles valeurs initiales de la tension interne ($U_1$, $U_{22}$).

**9.** Procédé selon l'une des revendications 1 à 6, **caractérisé par le fait que** ledit paramètre est le taux des décharges bloquées (TXn) lors desquelles la source de tension à basse impédance ne débite pas de courant, la montée en courant des impulsions électriques étant réglée de façon que ce taux des décharges bloquées (TXn) coïncide avec un taux de référence (TXref) correspondant à une usure minimale.

**10.** Procédé selon les revendications 3, 4 et 9, **caractérisé par le fait que** l'on effectue un asservissement de la montée en courant des décharges érosives au moyen de boucles d'asservissement successives, en lançant un cycle d'usinage (TD, TA, TB) avec ladite tension interne ($U_1$, $U_{22}$) fixé à une valeur initiale correspondant à une tension de référence (Uref) préétablie, en écartant par un test de discrimination les décharges contaminées, de courts-circuits et d'arcs, en détectant les décharges bloquées, en effectuant n = N cycles d'usinage, en calculant le taux de décharges bloquées (TXn), en comparant ce dernier à un taux de référence (TXref) préétabli correspondant à une usure minimale de l'électrode-outil, en diminuant, respectivement en augmentant, la tension interne ($U_1$, $U_{22}$) d'une valeur de réglage ($\delta$), si le taux calculé (TXn) est inférieur au taux de référence diminué d'un écart de réglage, respectivement supérieur au taux de référence additionné d'un écart de réglage, de façon à obtenir une nouvelle valeur initiale de la tension interne ($U_1$, $U_{22}$) et en effectuant des boucles d'asservissement successives avec les nouvelles valeurs initiales de la tension interne ($U_1$, $U_{22}$) obtenues.

**11.** Procédé selon la revendication 1, **caractérisé par le fait que** la grandeur de référence (Pref, TXref, Uref) est prédéterminée expérimentalement en effectuant des mesures de poids ou dimensionnelles de l'électrode-outil.

**12.** Dispositif pour la mise en oeuvre d'un procédé d'usinage par électroérosion comprenant une électrode-outil (O) séparée par une fente de travail (G) d'une électrode-pièce (P), un circuit électrique avec au moins une source de tension à basse impédance ($E_1$, $E_{22}$) et un circuit de régulation (CP) agencés de façon à appliquer des impulsions électriques entre l'électrode-outil et l'électrode-pièce, **caractérisé par le fait qu'**il comprend des moyens de réglage pour régler la montée en courant ($dI_2/dt$) en fonction du temps après l'amorçage d'une décharge entre l'électrode-outil et l'électrode-pièce de façon qu'un paramètre ($\bar{P}_N$, TXn) lié à cette montée en courant soit sensiblement égale à une grandeur de référence (Pref, TXref) correspondant à une valeur d'usure minimale de l'électrode-outil.

**13.** Dispositif selon la revendication 12, **caractérisé par le fait que** les moyens de réglage sont agencés de façon à modifier la tension interne ($U_1$, $U_{22}$) ajustable d'au moins une source de tension ($E_1$, $E_{22}$) à basse impédance.

**14.** Dispositif selon la revendication 12 ou 13, **caractérisé par le fait que** ledit paramètre est la pente moyenne ($\bar{P}_N$) de montée du courant d'usinage et **par le fait qu'**il comprend des moyens susceptibles de régler cette pente moyenne de façon qu'elle coïncide avec une pente de référence (Pref) préétablie à usure minimale de l'électrode-outil.

**15.** Dispositif selon les revendications 13 et 14, **caractérisé par le fait qu'**il comprend des moyens d'asservissement (CP) de la pente de montée du courant d'usinage à une pente de référence (Pref) préétablie comportant un régulateur (62) de ladite tension interne ($U_1$, $U_{22}$) de la source de tension, un dispositif générateur de décharges (63), un premier élément (64) agencé de façon à calculer la pente de montée du courant (Pn) d'une décharge, un second élément (65) destiné à calculer la pente moyenne ($\bar{P}_N$) sur un nombre prédéterminé (N) de décharges et un troisième élément (61) destiné à calculer la différence arithmétique entre la pente de référence (Pref) et la pente

moyenne ($\bar{P}_N$), le régulateur (62) étant agencé de façon à modifier ladite tension interne ($U_1$, $U_{22}$) en fonction du résultat de cette différence arithmétique, de façon que la pente moyenne ($\bar{P}_N$) corresponde à la pente de référence (Pref).

16. Dispositif selon la revendication 12 ou 13, **caractérisé par le fait que** ledit paramètre est le taux des décharges bloquées (TXn) lors desquelles la source de tension à basse impédance ne débite pas de courant, **par le fait qu'**il comprend des moyens susceptibles de régler ladite montée en courant de façon que le taux des décharges bloquées (TXn) coïncide avec un taux de référence (TXref) préétabli correspondant à une usure minimale de l'électrode-outil.

17. Dispositif selon les revendications 13 et 16, **caractérisé par le fait qu'**il comprend des moyens d'asservissement du taux des décharges bloquées (TXn) à un taux de référence (TXref) préétabli, comportant un régulateur (62a) de la tension interne ($U_1$), un dispositif générateur de décharges (63), un dispositif (64a) agencé de façon à déterminer et à calculer le taux de décharges bloquées (TXn) pour un nombre prédéterminé (N) de décharges, et un organe de calcul (61a) destiné à calculer la différence arithmétique entre le taux de référence (TXref) et le taux de décharges bloquées (TXn), le régulateur (62a) étant agencé de façon à modifier ladite tension interne ($U_1$) en fonction du résultat de cette différence arithmétique, pour que le taux de décharges bloquées (TXn) corresponde au taux de référence (TXref).

18. Dispositif selon l'une des revendications 12 à 17, **caractérisé par le fait qu'**il comprend une première source de tension ($E_1$) à basse impédance dont la tension interne ($U_1$) peut être réglée par une unité de commande (CP), une première branche ($B_1$) reliant une première borne de la première source de tension ($E_1$) à l'électrode-outil (O) et comportant, en série, une seconde source de tension ($E_2$) à basse impédance, un premier interrupteur ($S_1$), un premier organe de mesure ($M_1$) d'un premier courant ($I_1$), une bobine de self-induction ($L_1$), un second interrupteur ($S_2$), un second organe de mesure ($M_2$) d'un second courant ($I_2$) et une première diode ($D_4$), l'entrée du second interrupteur ($S_2$) étant reliée par une seconde diode ($D_2$) à la première borne de la première source de tension ($E_1$), et **par le fait que** l'électrode-pièce (P) est reliée à la seconde borne de la première source ($E_1$) par une troisième branche ($B_3$), elle-même reliée par une troisième diode ($D_1$) à la sortie du premier interrupteur ($S_1$) et par une quatrième diode ($D_3$) à la sortie du second interrupteur ($S_2$), l'unité de commande recevant des signaux des organes de mesure ($M_1$, $M_2$, $M_3$) et adressant des signaux de commande à la première source de tension ($E_1$) et aux interrupteurs ($S_1$, $S_2$).

19. Dispositif selon l'une des revendications 12 à 17, **caractérisé par le fait qu'**il comprend une première source de tension ($E_{21}$) à basse impédance dont une première borne est reliée à l'électrode-outil (O) par une première branche ($B_{21}$) comprenant, en série, un premier interrupteur ($S_{21}$), une source additionnelle de tension ($E_{22}$) à basse impédance dont la tension interne ($U_{22}$) peut être réglée par une unité de commande (CP), un organe de mesure de courant ($M_{22}$) et une première diode ($D_{24}$), **par le fait que** l'électrode-pièce est reliée par une seconde branche ($B_{23}$) avec un second interrupteur ($S_{22}$) à la seconde borne de la première source de tension ($E_{21}$), et **par le fait qu'**il comprend une troisième branche ($B_{25}$) comportant une seconde diode ($D_{21}$) reliant les entrées des deux interrupteurs ($S_{21}$, $S_{22}$) et une quatrième branche ($B_{26}$) comportant une troisième diode ($D_{22}$) reliant les sorties des deux interrupteurs ($S_{21}$, $S_{22}$), l'unité de commande recevant des signaux de l'organe de mesure ($M_{22}$) et adressant des signaux de commande à la source additionnelle de tension ($E_{22}$) et aux interrupteurs ($S_{21}$, $S_{22}$).

20. Dispositif selon la revendication 18 ou 19, **caractérisé par le fait qu'**il comprend un circuit d'amorçage des décharges érosives ($B_4$) branché en parallèle entre l'électrode-outil (O) et l'électrode-pièce (P), ce circuit comportant un générateur ($E_3$) et un interrupteur ($S_3$) recevant des signaux de commande de l'unité de commande (CP).

21. Dispositif selon la revendication 20, **caractérisé par le fait qu'**il comprend un dispositif de protection anti-courts-circuits (SPAC) comportant une capacité branchée aux bornes du générateur ($E_3$) du circuit d'amorçage et susceptible d'être reliée à l'électrode-outil (O) par l'intermédiaire d'une diode ($D_{31}$) et d'un interrupteur ($S_{31}$) recevant des signaux de commande de l'unité de commande (CP).

**Claims**

1. Process for machining by electroerosion, according to which an electrode piece (P) is machined by means of an electrode-tool (0) separated from each other by a working space (G) by applying electrical impulses between the electrode-tool and the electrode-piece by means of an electrical circuit comprising at least one low impedance

voltage source ($E_1$, $E_{22}$) and a regulation circuit (CP), **characterized by** the fact that there is carried out a regulation of the increase of current of the electrical impulses as a function of the time after triggering a discharge between the electrode-tool and electrode-piece such that a parameter ($\bar{P}_N$, $TX_n$) connected to this current increase will be substantially equal to a reference value ($P_{ref}$, $TX_{ref}$) corresponding to a minimum wear value of the electrode tool.

2. Process according to claim 1, **characterized by** the fact that there is carried out the regulation of the current increase of the electrical impulses during a first transitory phase and that there is maintained in a second phase the machining current to at least one reference value ($I_p$) as soon as the increase in current has reached this reference value ($I_p$).

3. Process according to claim 1 or 2, **characterized by** the fact that the regulation of the current increase is carried out by means of a servo loop such that a statistical size ($\bar{P}_N$, $TX_n$) representative of said parameter coincides with said predetermined reference value ($P_{ref}$, $TX_{ref}$).

4. Process according to one of the preceding claims, **characterized by** the fact that said regulation is carried out by acting on the adjustable internal voltage ($U_1$, $U_{22}$) of at least one low impedance adjustable voltage source ($E_1$, $E_{22}$).

5. Process according to claims 1 and 4, **characterized by** the fact that the reference value ($P_{ref}$) corresponding to a minimum wear value is determined by causing the internal voltage ($U_1$, $U_{22}$) of the adjustable voltage source ($E_1$, $E_{22}$) to vary and by observing the dispersion of the spectrum of the slope angles (DA) of increase of current of a given number of discharges.

6. Process according to claim 5, **characterized by** the fact that the reference value ($P_{ref}$) is obtained when the dispersion of the spectrum of the slope angles (DA) is substantially a maximum.

7. Process according to one of the preceding claims, **characterized by** the fact that said parameter is the mean slope ($\bar{P}_N$) of increase of the machining current, adjusted so as to coincide with a pre-established reference slope ($P_{ref}$) for minimum wear of the electrode tool.

8. Process according to claims 3, 4 and 7 **characterized by** the fact that there is carried out a servo control of a mean slope of current increase ($\bar{P}_N$) of the erosive discharges by means of successive servo control loops, by launching a machining cycle (TD, TA, TB) with said internal voltage ($U_1$, $U_{22}$) fixed at an initial value corresponding to a pre-established reference voltage ($U_{ref}$), by discarding by a discrimination test the contaminated discharge, the short-circuits discharges and the arc discharges, by determining the slope of current increase ($P_n$) of the retained discharges, by carrying out n = N machining cycles, by calculating the mean scope of current increase ($\bar{P}_N$) for the N retained discharges, by comparing the mean slope of current increase ($\bar{P}_N$) obtained to said reference slope ($P_{ref}$), by decreasing, respectively increasing the internal voltage ($U_1$, $U_{22}$) by a predetermined regulation value ($\delta$), if the mean slope ($\bar{P}_N$) calculated is greater than the reference slope ($P_{ref}$) plus an adjustment spacing ($\Delta$), respectively lower than the reference slope ($P_{ref}$) diminished by said adjustment spacing ($\Delta$), so as to obtain a new initial value of said internal voltage ($U_1$, $U_{22}$), and by carrying out successive servo control loops with the new initial values of the internal voltage ($U_1$, $U_{22}$).

9. Process according to one of claims 1 to 6, **characterized by** the fact that said parameter is the number of blocked discharges ($TX_n$) during which the low impedance voltage source does not flow with current, the increase in current of the electrical impulses being adjusted such that the number of the blocked discharges ($TX_n$) coincides with a reference number ($TX_{ref}$) corresponding to minimum wear.

10. Process according to claims 3, 4 and 9, **characterized by** the fact that a servo loop is carried out for the current increase of the erosive discharges by means of successive servo loops, by starting a machining cycle (TD, TA, TB) with said internal voltage ($U_1$, $U_{22}$) fixed to an initial value corresponding to a pre-established reference voltage ($U_{ref}$), by discarding by a discrimination test the contaminated discharges, the short-circuits discharges and the arc discharges, by detecting the blocked discharges, by carrying out n = N machining cycles, by computing the number of blocked discharges ($TX_n$), by comparing this latter to a pre-established reference number ($TX_{ref}$) corresponding to minimum wear of the electrode-tool, by decreasing respectively increasing, the internal voltage ($U_1$, $U_{22}$) by a regulation value ($\delta$), if the calculated number ($TX_n$) is lower than the reference number decreased by an adjustment spacing, respectively greater than the reference number plus the adjustment spacing, so as to obtain a new initial value of the internal voltage ($U_1$, $U_{22}$) and by carrying out successive servo loops with the new initial values of the internal voltage ($U_1$, $U_{22}$) obtained.

**11.** Process according to claim 1, **characterized by** the fact that the reference value ($P_{ref}$, $TX_{ref}$, $U_{ref}$) is experimentally predetermined by carrying out measurements of weight or dimensions of the electrode-tool.

**12.** Device for carrying out a machining process by electroerosion, comprising an electrode-tool (0) separated by a working slot (G) from an electrode-piece (P), an electrical circuit with at least one low impedance voltage source ($E_1$, $E_{22}$) and an adjustment circuit (CP) arranged so as to apply electrical impulses between the electrode-tool and the electrode-piece, **characterized by** the fact that it comprises regulation means to adjust the current increase ($DI_2/dt$) as a function of the time after triggering a discharge between the electrode-tool and the electrode-piece such that a parameter ($\bar{P}_N$, $TX_n$) connected with this current increase will be substantially equal to a reference value ($P_{ref}$, $TX_{ref}$) corresponding to a minimum wear value of the electrode-tool.

**13.** Device according to claim 12, **characterized by** the fact that the regulation means are arranged so as to modify the adjustable internal voltage ($U_1$, $U_{22}$) of at least one low impedance voltage source ($E_1$, $E_{22}$).

**14.** Device according to claim 12 or 13, **characterized by** the fact that said parameter is the mean slope ($\bar{P}_N$) of increase of machining current and by the fact that it comprises means adapted to adjust this mean slope such that it coincides with a pre-established reference slope ($P_{ref}$) corresponding to minimum wear of the electrode tool.

**15.** Device according to claims 13 and 14, **characterized by** the fact that it comprises servo control means (CP) for the slope of increase of the machining current to a pre-established reference slope ($P_{ref}$), comprising a regulator (62) of said internal voltage ($U_1$, $U_{22}$) of the voltage source, a discharge generating device (63), a first element (64) arranged so as to calculate the slope of increase of the current ($P_n$) of a discharge, a second element (65) adapted to calculate the mean slope ($\bar{P}_N$) of a predetermined number (N) of discharges and a third element (61) adapted to calculate the arithmetic difference between the reference slope ($P_{ref}$) and the mean slope ($\bar{P}_N$), the regulator (62) being arranged so as to modify said internal voltage ($U_1$, $U_{22}$) as a function of the result of this arithmetic difference, such that the mean slope ($\bar{P}_N$) corresponds to the reference slope ($P_{ref}$).

**16.** Device according to claim 12 or 13, **characterized by** the fact that said parameter is the number of blocked discharges ($TX_n$) during which the low impedance voltage source does not flow with current, by the fact that it comprises means adapted to regulate said current increase such that the number of blocked discharges ($TX_n$) corresponds with a pre-established reference number ($TX_{ref}$) corresponding to minimum wear of the electrode-tool.

**17.** Device according to claims 13 and 16, **characterized by** the fact that it comprises servo control means for adjusting the number of the blocked discharges ($TX_n$) to a pre-established reference number ($TX_{ref}$), comprising a regulator (62a) for the internal voltage ($U_1$), a discharge generating device (63), a device (64a) arranged so as to determine and to compute the number of blocked discharges ($TX_n$) for a predetermined number (N) of discharges, and a computing member (61 a) adapted to compute the arithmetic difference between the reference number ($TX_{ref}$) and the number of blocked discharges ($TX_n$), the regulator (62a) being arranged so as to modify said internal voltage ($U_1$) as a function of the result of this arithmetic difference, such that the number of blocked discharges ($TX_n$) corresponds to the reference number ($TX_{ref}$).

**18.** Device according to one of claims 12 to 17, **characterized by** the fact that it comprises a first voltage source ($E_1$) with low impedance, whose internal voltage ($U_1$) can be adjusted by means of a control unit (CP), a first branch ($B_1$) connecting a first terminal of the first voltage source ($E_1$) to the electrode-tool (0) and comprising, in series, a second low impedance voltage source (E2), a first switch ($S_1$), a first measuring member ($M_1$) of a first current ($I_1$), a self-induction winding ($L_1$), a second switch ($S_2$), a second measuring member ($M_2$) of a second current ($I_2$) and a first diode ($D_4$), the input of the second switch ($S_2$) being connected by a second diode ($D_2$) to the first terminal of the first voltage source ($E_1$), and by the fact that the electrode-piece (P) is connected to the second terminal of the first source ($E_1$) by a third branch ($B_3$), itself connected by a third diode ($D_1$) to the outlet of the first switch ($S_1$) and by a fourth diode ($D_3$) to the output of said second switch ($S_2$), the control unit receiving signals from the measuring members ($M_1$, $M_2$, $M_3$) and addressing control signals to the first voltage source ($E_1$) and to the switches ($S_1$, $S_2$).

**19.** Device according to one of claims 12 to 17, **characterized by** the fact that it comprises a first low impedance voltage source ($E_{21}$) whose first terminal is connected to the electrode-tool (0) by a first branch ($B_{21}$) comprising, in series, a first switch ($S_{21}$), an additional low impedance voltage source ($E_{22}$) whose internal voltage ($U_{22}$) can be adjusted by a control unit (CP), a current measuring member ($M_{22}$) and a first diode ($D_{24}$), by the fact that the electrode-piece is connected by a second branch ($B_{23}$) with a second switch ($S_{22}$) to the second terminal of the

first voltage source (E$_{21}$), and by the fact that it comprises a third branch (B$_{25}$) comprising a second diode (D$_{21}$) connecting the inputs of the two switches (S$_{21}$, S$_{22}$) and a fourth branch (B$_{26}$) comprising a third diode (D$_{22}$) connecting the outputs of the two switches (S$_{21}$, S$_{22}$), the control unit receiving signals from the measuring member (M$_{22}$) and addressing control signals to the additional voltage source (E$_{22}$) and to the switches (S$_{21}$, S$_{22}$).

20. Device according to claim 18 or 19, **characterized by** the fact that it comprises a triggering circuit for the erosive discharges (B$_4$) connected in parallel between the electrode-tool (0) and the electrode-piece (P), the circuit comprising a generator (E$_3$) and a switch (S$_3$) receiving control signals from the control unit (CP).

21. Device according to claim 20, **characterized by** the fact that it comprises an anti-short-circuit protection device (SPAC) comprising a capacitance connected to the terminals of the generator (E$_3$) of the triggering circuit and adapted to be connected to the electrode-tool (0) by means of a diode (D$_{31}$) and a switch (S$_{31}$) receiving control signals from the control unit (CP).

## Patentansprüche

1. Verfahren zur Funkenerosionsbearbeitung, bei dem eine Werkstückelektrode (P) mit Hilfe einer Werkzeugelektrode (O) bearbeitet wird, die voneinander durch einen Arbeitsabstand (G) getrennt sind, indem mit Hilfe eines elektrischen Stromkreises, der zumindest eine Spannungsquelle niedriger Impedanz (E$_1$, E$_{22}$) sowie einen Regelkreis (CP) umfasst, zwischen der Werkzeugelektrode und der Werkstückelektrode elektrische Impulse angelegt werden, **dadurch gekennzeichnet, dass** man den Anstieg des Stromes der elektrischen Impulse in Abhängigkeit von der Zeit nach der Aktivierung einer Entladung zwischen der Werkzeugelektrode und der Werkstückelektrode so regelt, dass ein mit diesem Stromanstieg verbundener Parameter ($\bar{P}_N$, $TX_n$) im Wesentlichen einer Bezugsgrösse ($P_{ref}$, $TX_{ref}$) gleich ist, die einem minimalen Abnutzungswert des Elektrodenwerkzeugs entspricht.

2. Verfahren gemäss Anspruch 1, **dadurch gekennzeichnet, dass** die Regelung des Anstiegs des Stromes der elektrischen Impulse während einer ersten oder Übergangsphase erfolgt und dass in einer zweiten Phase der Bearbeitungsstrom auf zumindest einem Sollwert ($I_p$) gehalten wird, sobald der Stromanstieg diesen Sollwert ($I_p$) erreicht hat.

3. Verfahren gemäss Anspruch 1 oder 2, **dadurch gekennzeichnet, dass** die Regelung des Stromanstiegs mit Hilfe einer Regelschleife in der Weise erfolgt, dass eine für den benannten Parameter repräsentative statistische Grösse ($\bar{P}_N$, $TX_n$) mit der benannten, vorbestimmten Bezugsgrösse ($P_{ref}$, $TX_{ref}$) übereinstimmt.

4. Verfahren gemäss einem der vorangehenden Ansprüche, **dadurch gekennzeichnet, dass** die benannte Regelung erfolgt, indem man auf die regelbare innere Spannung ($U_1$, $U_{22}$) von zumindest einer regelbaren Spannungsquelle (E$_1$, E$_{22}$) niedriger Impedanz einwirkt.

5. Verfahren gemäss den Ansprüchen 1 bis 4, **dadurch gekennzeichnet, dass** die einem minimalen Wert der Abnutzung entsprechende Bezugsgrösse ($P_{ref}$) bestimmt wird, indem man die innere Spannung ($U_1$, $U_{22}$) der regelbaren Spannungsquelle (E$_1$, E$_{22}$) variiert und die Dispersion des Spektrums der Neigungswinkel ($DA$) des Stromanstiegs einer gegebenen Anzahl von Entladungen beobachtet.

6. Verfahren gemäss Anspruch 5, **dadurch gekennzeichnet, dass** die Bezugsgrösse ($P_{ref}$) gewonnen wird, wenn die Dispersion des Spektrums der Neigungswinkel ($DA$) im Wesentlichen maximal ist.

7. Verfahren gemäss einem der vorangehenden Ansprüche, **dadurch gekennzeichnet, dass** der benannte Parameter die mittlere Neigung ($\bar{P}_N$) des Anstiegs des Bearbeitungsstromes ist, der so geregelt ist, dass er mit einer im voraus festgelegten Bezugsneigung ($P_{ref}$) für minimale Abnutzung der Werkzeugelektrode übereinstimmt.

8. Verfahren gemäss den Ansprüchen 3, 4 und 7, **dadurch gekennzeichnet, dass** eine Regelung einer mittleren Neigung des Stromanstiegs ($\bar{P}_N$) der erosiven Entladungen mit Hilfe aufeinanderfolgender Regelschleifen erfolgt, indem ein Bearbeitungszyklus ($T_D$, $T_A$, $T_B$) begonnen wird, bei dem die benannte innere Spannung ($U_1$, $U_{22}$) auf einen Anfangswert festgelegt wird, der einer im voraus festgelegten Bezugsspannung ($U_{ref}$) entspricht, durch einen Unterscheidungstest die durch Kurzschlüsse und Lichtbögen verdorbenen Entladungen ausgeschieden werden, die Neigung des Stromanstiegs ($P_n$) in den zurückbehaltenen Entladungen bestimmt wird, $n = N$ Bearbeitungszyklen ausgeführt werden, die mittlere Neigung des Stromanstiegs ($\bar{P}_N$) aus den $N$ zurückbehaltenen Entladungen berechnet wird, die erhaltene mittlere Neigung des Stromanstiegs ($\bar{P}_N$) mit der benannten Bezugsneigung ($P_{\text{ref}}$) verglichen wird, die innere Spannung ($U_1$, $U_{22}$) um einen vorbestimmten Regelungswert (ä) verringert bzw. erhöht wird, sofern die berechnete mittlere Neigung ($\bar{P}_N$) grösser als die um eine Regelungsabweichung (Ä) vermehrte Bezugsneigung ($P_{\text{ref}}$) bzw. kleiner als die um diese Regelungsabweichung (Ä) verringerte Bezugsneigung ($P_{\text{ref}}$) ist, um einen neuen Anfangswert der benannten inneren Spannung ($U_1$, $U_{22}$) zu erhalten, und aufeinanderfolgende Regelschleifen mit den neuen Anfangswerten der inneren Spannung ($U_1$, $U_{22}$) durchgeführt werden.

**9.** Verfahren gemäss einem der Ansprüche 1 bis 6, **dadurch gekennzeichnet, dass** der benannte Parameter der Anteil der blockierten Entladungen ($TX_n$) ist, während derer die Spannungsquelle niedriger Impedanz keinen Strom liefert, wobei der Stromanstieg der elektrischen Impulse so geregelt ist, dass dieser Anteil blockierter Entladungen ($TX_n$) mit einem einer minimalen Abnutzung entsprechenden Bezugsanteil ($TX_{\text{ref}}$) übereinstimmt.

**10.** Verfahren gemäss den Ansprüchen 3, 4 und 9, **dadurch gekennzeichnet, dass** eine Regelung des Stromanstiegs der erosiven Entladungen mit Hilfe aufeinanderfolgender Regelschleifen erfolgt, indem ein Bearbeitungszyklus ($T_D$, $T_A$, $T_B$) begonnen wird, bei dem die benannte innere Spannung ($U_1$, $U_{22}$) auf einen Anfangswert festgelegt wird, der einer im voraus festgelegten Bezugsspannung ($U_{\text{ref}}$) entspricht, durch einen Unterscheidungstest die durch Kurzschlüsse und Lichtbögen verdorbenen Entladungen ausgeschieden werden, die blockierten Entladungen aufgefunden werden, $n = N$ Bearbeitungszyklen ausgeführt werden, der Anteil von blockierten Entladungen ($TX_n$) berechnet wird, letzterer mit einem im voraus festgelegten Bezugsanteil ($TX_{\text{ref}}$) verglichen wird, der einer minimalen Abnutzung des Elektrodenwerkzeugs entspricht, die innere Spannung ($U_1$, $U_{22}$) um einen vorbestimmten Regelungswert (ä) verringert bzw. erhöht wird, sofern der berechnete Anteil ($TX_n$) kleiner als der um eine Regelungsabweichung verringerte Bezugsanteil bzw. grösser als der um eine Regelungsabweichung vermehrte Bezugsanteil ist, um einen neuen Anfangswert der benannten inneren Spannung ($U_1$, $U_{22}$) zu erhalten, und aufeinanderfolgende Regelschleifen mit den erhaltenen, neuen Anfangswerten der inneren Spannung ($U_1$, $U_{22}$) durchgeführt werden.

**11.** Verfahren gemäss Anspruch 1, **dadurch gekennzeichnet, dass** die Bezugsgrösse ($P_{\text{ref}}$, $TX_{\text{ref}}$, $U_{\text{ref}}$) im voraus experimentell bestimmt wird, indem Messungen des Gewichts oder der Abmessungen des Elektrodenwerkzeugs durchgeführt werden.

**12.** Vorrichtung für die Umsetzung eines Verfahrens zur Funkenerosionsbearbeitung mit einer durch einen Arbeitsspalt (G) von einer Werkstückelektrode (P) getrennten Werkzeugelektrode (O), mit einem elektrischen Stromkreis mit zumindest einer Spannungsquelle niedriger Impedanz ($E_1$, $E_{22}$) sowie einem Regelkreis (CP), die so ausgelegt sind, dass zwischen der Werkzeugelektrode und der Werkstückelektrode elektrische Impulse angelegt werden, **dadurch gekennzeichnet, dass** sie Mittel zur Regelung umfasst, um den Stromanstieg (d$I_2$/d$t$) in Abhängigkeit von der Zeit nach der Aktivierung einer Entladung zwischen der Werkzeugelektrode und der Werkstückelektrode so zu regeln, dass ein mit diesem Stromanstieg verbundener Parameter ($\bar{P}_N$, $TX_n$) im Wesentlichen einer Bezugsgrösse ($P_{\text{ref}}$, $TX_{\text{ref}}$) gleich ist, die einem minimalen Abnutzungswert des Elektrodenwerkzeugs entspricht.

**13.** Vorrichtung gemäss Anspruch 12, **dadurch gekennzeichnet, dass** die Mittel zur Regelung so ausgelegt sind, dass die einstellbare innere Spannung ($U_1$, $U_{22}$) von zumindest einer Spannungsquelle ($E_1$, $E_{22}$) niedriger Impedanz verändert werden kann.

**14.** Vorrichtung gemäss Anspruch 12 oder 13, **dadurch gekennzeichnet, dass** der benannte Parameter die mittlere Neigung ($\bar{P}_N$) des Anstiegs des Bearbeitungsstromes ist, und dadurch, dass sie Mittel umfasst, die in der Lage sind, diese mittlere Neigung so zu regeln, dass sie mit einer im voraus festgelegten Bezugsneigung ($P_{\text{ref}}$) für minimale Abnutzung der Werkzeugelektrode übereinstimmt.

**15.** Vorrichtung gemäss den Ansprüchen 13 und 14, **dadurch gekennzeichnet, dass** sie Mittel zur Regelung (CP) der Neigung des Anstiegs des Bearbeitungsstromes auf eine im voraus festgelegte Bezugsneigung ($P_{\text{ref}}$) mit einem Regler (62) der benannten inneren Spannung ($U_1$, $U_{22}$) der Spannungsquelle, einer Vorrichtung für die Erzeugung von Entladungen (63), einem ersten Element (64), das so ausgelegt ist, dass es die Neigung des Stromansties ($P_n$) einer Entladung berechnet, einem zweiten Element (65), das dafür bestimmt ist, die mittlere Neigung ($\bar{P}_N$) über eine im voraus festgelegte Anzahl ($N$) von Entladungen zu berechnen, sowie einem dritten Element (61), das dazu bestimmt ist, die arithmetische Differenz zwischen der Bezugsneigung ($P_{\text{ref}}$) und der mittleren Neigung ($\bar{P}_N$) zu berechnen, umfasst, wobei der Regler (62) so ausgelegt ist, dass er die benannte innere Spannung ($U_1$, $U_{22}$) in Abhängigkeit vom Ergebnis dieser arithmetischen Differenz so abwandelt, dass die mittlere Neigung ($\bar{P}_N$) der Bezugsneigung ($P_{\text{ref}}$) entspricht.

**16.** Vorrichtung gemäss Anspruch 12 oder 13, **dadurch gekennzeichnet, dass** der benannte Parameter der Anteil der blockierten Entladungen ($TX_n$) ist, während derer die Spannungsquelle niedriger Impedanz keinen Strom liefert, dadurch, dass sie Mittel umfasst, die in der Lage sind, den benannten Stromanstieg so zu regeln, dass der Anteil blockierter Entladungen ($TX_n$) mit einem im voraus festgelegten, einer minimalen Abnutzung der Werkzeugelektrode entsprechenden Bezugsanteil ($TX_{ref}$) übereinstimmt.

**17.** Vorrichtung gemäss den Ansprüchen 13 und 16, **dadurch gekennzeichnet, dass** sie Mittel zur Regelung des Anteils der blockierten Entladungen ($TX_n$) auf einen im voraus festgelegten Bezugsanteil ($TX_{ref}$) mit einem Regler (62a) der inneren Spannung ($U_1$), einer Vorrichtung für die Erzeugung von Entladungen (63), einer Vorrichtung (64a), die so ausgelegt ist, dass sie den Anteil von blockierten Entladungen ($TX_n$) für eine vorbestimmte Anzahl ($N$) von Entladungen bestimmt und berechnet, sowie einem Rechenglied (61a), das dazu bestimmt ist, die arithmetische Differenz zwischen dem Bezugsanteil ($TX_{ref}$) und dem Anteil von blockierten Entladungen ($TX_n$) zu berechnen, umfasst, wobei der Regler (62a) so ausgelegt ist, dass er die benannte innere Spannung ($U_1$) in Abhängigkeit vom Ergebnis dieser arithmetischen Differenz so abwandelt, dass der Anteil von blockierten Entladungen ($TX_n$) dem Bezugsanteil ($TX_{ref}$) entspricht.

**18.** Vorrichtung gemäss einem der Ansprüche 12 bis 17, **dadurch gekennzeichnet, dass** sie eine erste Spannungsquelle ($E_1$) niedriger Impedanz, deren innere Spannung ($U_1$) von einer Steuereinheit (CP) geregelt werden kann, einen ersten Zweig ($B_1$), der eine erste Klemme der ersten Spannungsquelle ($E_1$) mit der Werkzeugelektrode (O) verbindet und in Reihe geschaltet eine zweite Spannungsquelle ($E_2$) niedriger Impedanz, einen ersten Schalter ($S_1$), ein erstes Messglied ($M_1$) für einen ersten Strom ($I_1$), eine Selbstinduktionsspule ($L_1$), einen zweiten Schalter ($S_2$), ein zweites Messglied ($M_2$) für einen zweiten Strom ($I_2$) sowie eine erste Diode ($D_4$) enthält, wobei der Eingang des zweiten Schalters ($S_2$) über eine zweite Diode ($D_2$) mit der ersten Klemme der ersten Spannungsquelle ($E_1$) verbunden ist, und dadurch, dass die Werkstückelektrode (P) über einen dritten Zweig ($B_3$) mit der zweiten Klemme der ersten Quelle ($E_1$) verbunden ist, wobei dieser dritte Zweig über eine dritte Diode ($D_1$) mit dem Ausgang des ersten Schalters ($S_1$) und über eine vierte Diode ($D_3$) mit dem Ausgang des zweiten Schalters ($S_2$) verbunden ist, wobei die Steuereinheit Signale von den Messgliedern ($M_1$, $M_2$, $M_3$) empfängt und Steuersignale zur ersten Spannungsquelle ($E_1$) und zu den Schaltern ($S_1$, $S_2$) schickt.

**19.** Vorrichtung gemäss einem der Ansprüche 12 bis 17, **dadurch gekennzeichnet, dass** sie eine erste Spannungsquelle ($E_{21}$) niedriger Impedanz umfasst, von der eine erste Klemme über einen ersten Zweig ($B_{21}$) mit der Werkzeugelektrode (O) verbunden ist, wobei dieser erste Zweig in Reihe geschaltet einen ersten Schalter ($S_{21}$), eine zusätzliche Spannungsquelle ($E_{22}$) niedriger Impedanz, deren innere Spannung ($U_{22}$) durch eine Steuereinheit (CP) geregelt werden kann, ein Strommessglied ($M_{22}$) und eine erste Diode ($D_{24}$) umfasst, dadurch, dass die Werkstückelektrode über einen zweiten Zweig ($B_{23}$) mit einem zweiten Schalter ($S_{22}$) mit der zweiten Klemme der ersten Spannungsquelle ($E_{21}$) verbunden ist, und dadurch, dass sie einen dritten Zweig ($B_{25}$), der eine zweite Diode ($D_{21}$) umfasst, die die Eingänge der beiden Schalter ($S_{21}$, $S_{22}$) verbindet, sowie einen vierten Zweig ($B_{26}$) umfasst, der eine dritte Diode ($D_{22}$) umfasst, die die Ausgänge der beiden Schalter ($S_{21}$, $S_{22}$) verbindet, wobei die Steuereinheit Signale vom Messglied ($M_{22}$) empfängt und Steuersignale zur zusätzlichen Spannungsquelle ($E_{22}$) und zu den Schaltern ($S_{21}$, $S_{22}$) schickt.

**20.** Vorrichtung gemäss Anspruch 18 oder 19, **dadurch gekennzeichnet, dass** sie einen Stromkreis für die Aktivierung von erosiven Entladungen ($B_4$) umfasst, der parallel zwischen die Werkzeugelektrode (O) und die Werkstückelektrode (P) geschaltet ist, wobei dieser Stromkreis einen Generator ($E_3$) und einen Schalter ($S_3$) umfasst, der Steuersignale von der Steuereinheit (CP) empfängt.

**21.** Vorrichtung gemäss Anspruch 20, **dadurch gekennzeichnet, dass** sie eine Schutzvorrichtung gegen Kurzschlüsse (SPAC) umfasst, die einen Kondensator enthält, der an die Klemmen des Generators ($E_3$) des Aktivierungskreises angeschlossen ist und über eine Diode ($D_{31}$) und einen Schalter ($S_{31}$), der Steuersignale von der Steuereinheit (CP) empfängt, mit der Werkzeugelektrode (O) verbunden werden kann.

fig.1

fig.2

$I_2$

DA

$U_1$=18Volts

8µs

Temps

fig.3

$I_2$

P ref.

DA

$U_1$=25Volts

5µs

Temps

fig.4

$I_2$

$U_1$=30Volts

2µs

DA

Temps

fig.5

DA
(degrés)

10     20     30     40

$U_1$ (Volts)

## fig.7

a) START

b) $U_1 = U$ ref.

c) $n = \emptyset$

d) CYCLE TD-TA-TB

e) $S_2$ $t = 0$

f) $i_L = i_2 (t = t_1)$

g) $i_H = i_2 (t = t_2)$

h) test décharges — non

oui

i) $P_n = \dfrac{i_H - i_L}{t_2 - t_1}$

j) $n = n + 1$

k) $n = N$ ? — non

oui

l) $\overline{P}_N = \dfrac{1}{N}(P_\emptyset + P_1 + P_2 + ... + P_N)$

m) $\overline{P}_N > P_{REF.} + \Delta$ ? — oui → $U_1 = U_1 - \delta$

non

n) $\overline{P}_N < P_{REF.} - \Delta$ ? — oui → $U_1 = U_1 + \delta$

non

o)

**fig.6**

**fig.9**

**fig.10**

fig.8

fig.12

fig.11

fig.13

fig.14